# EUROPÄISCHE PATENTSCHRIFT

(11) **EP 4 185 494 B1**
(45) Veröffentlichungstag und Bekanntmachung des Hinweises auf die Patenterteilung: **07.08.2024**
(21) Anmeldenummer: 21743118.8
(22) Anmeldetag: 08.07.2021
(51) Int. Cl.: B60S 1/48, B60S 1/56, G02B 27/00, F16K 11/00, B60S 1/54

(54) **SENSORREINIGUNGSSYSTEM UND FAHRZEUG DAMIT**
SENSOR CLEANING SYSTEM, VEHICLE
SYSTÈME DE NETTOYAGE DE CAPTEUR, VÉHICULE

(30) Priorität: 23.07.2020 DE 102020119473
(43) Veröffentlichungstag der Anmeldung: 31.05.2023
(73) Patentinhaber: ZF CV Systems Global GmbH, 3006 Bern (CH)
(72) Erfinder: COHRS, Jan, 30173 Hannover (DE); FIEBRANDT, Jan, 30171 Hannover (DE); RICKE, Janik, 31311 Uetze (DE)
(74) Vertreter: Ohlendorf, Henrike
(86) Internationale Anmeldenummer: PCT/EP2021/068924
(87) Internationale Veröffentlichungsnummer: WO 2022/017807

(56) Entgegenhaltungen:
- DE-A1- 102018 126 090
- US-A1- 2018 015 908
- US-A1- 2018 290 632
- US-A1- 2020 001 832
- US-A1- 2020 180 567

## Beschreibung

Die Erfindung betrifft in einem ersten Aspekt ein Sensorreinigungssystem gemäß dem Oberbegriff des Anspruchs 1. Die Erfindung betrifft in einem zweiten Aspekt ein Fahrzeug gemäß Anspruch 16.

Sensorreinigungssysteme, insbesondere für Fahrzeuge, sind allgemein bekannt. Derartige Sensorreinigungssysteme müssen bei Bauraum- und Gewichtsbeschränkungen eine effektive Reinigung von Fahrzeugsensoren ermöglichen, um durch saubere Sensoren insbesondere Assistenzsysteme und autonome Fahrfunktionen des Fahrzeugs gewährleisten zu können. Dabei ist insbesondere das Vorhalten einer ausreichenden Menge von Reinigungsflüssigkeit vor dem Hintergrund der Bauraum- und Gewichtsbeschränkungen in einem Fahrzeug problematisch. Auch ist es generell erstrebenswert, den apparativen Aufwand für ein Sensorreinigungssystem gering zu halten.

Die DE 101 10 490 A1 beschreibt eine Einrichtung zur Vorratssteuerung von Flüssigkeiten, bei der vorgesehen ist, dass der Flüssigkeitsvorrat in einem Arbeitsbehälter und mindestens einem den Arbeitsbehälter nachfüllend speisenden Vorratsbehälter aufgeteilt wird. Bei einem derartigen Ansatz kann eine geeignete Bauraumnutzung erreicht werden und trotzdem ein großvolumiger Vorrat an Waschwasser vorgehalten werden. Bei einem derartigen Ansatz entstehen aufgrund der Vielzahl von Einzelkomponenten jedoch relativ hohe Systemkosten. Auch muss ein relativ großer zentraler Vorratstank im Fahrzeug vorgehalten werden.

Andere Ansätze, die das Problem der begrenzten Reinigungsflüssigkeit in einem Fahrzeug berücksichtigen, basieren auf dem Sammeln von Regenwasser. So beschreibt die DE 20 2017 100 529 U1 ein Regenwassersammelsystem für ein Kraftfahrzeug, umfassend: einen Regenwassersammler; eine Klappe für den Regenwassersammler, wobei die Klappe zwischen einer geöffneten Position und einer geschlossenen Position verschiebbar ist; und eine Steuerung, die dazu ausgelegt ist, die Klappe als Reaktion auf eine Dateneingabe bezüglich der Detektion von Niederschlag und einem Pegel von Windschutzscheibenwaschflüssigkeit in einem Windschutzscheibenwaschsystem des Kraftfahrzeugs zu öffnen oder zu schließen.

Weitere Ansätze die das Problem einer begrenzten Menge von Reinigungsflüssigkeit in einem Fahrzeug berücksichtigen, basieren auf der Wiederverwendung der Reinigungsflüssigkeit. Ein derartiger Ansatz ist in US 2020/0010055 A1 beschrieben, in der ein Kamerareinigungssystem vorgestellt wird mit einem Auffangbehälter, in dem eine Reinigungsflüssigkeit nach der Reinigung gesammelt wird und wiederverwendet werden kann. Das dort gezeigte Kamerareinigungssystem weist relativ große Abmessungen auf und die zu reinigende Kamera muss aktiv über eine Kinematik in einen Reinigungsbereich hinein bewegt werden.

Ein ähnlicher Ansatz ist in der WO19029806 A1 beschrieben. Bei dem dort gezeigten System wird während der Reinigung eine Abdeckung vor den Sensor gefahren, was zu dem Nachteil führt, dass während der Reinigung die Funktion des Sensors nicht zur Verfügung steht. Auch ist eine derartige Kinematik anfällig für Fehler.

Derartige, auf der Wiederverwendung von Reinigungsflüssigkeit basierenden Ansätzen können ein Nachfüllen des Systems zwar verzögern, aber nicht vollständig vermeiden.

Weitere Sensorreinigungssysteme sind ebenfalls aus der Dokumenten US 2020/001832, US 2018/015908, US 2018/290632 und US 2020/180567 bekannt.

Generell sind Reinigungssysteme zum Reinigen von Sensoren in Fahrzeugen noch verbesserungswürdig, insbesondere hinsichtlich eines Aufbaus, der die Gewichts- und Bauraumbeschränkungen in einem Fahrzeug berücksichtigt und gleichzeitig das Bereitstellen einer ausreichenden Menge an Reinigungsflüssigkeit ermöglicht.

Daher ist es wünschenswert, mindestens einen der genannten Nachteile zu verbessern.

An dieser Stelle setzt die Erfindung an, deren Aufgabe es ist, ein verbessertes Reinigungssystem anzugeben, das mindestens einen der genannten Nachteile verbessert. Insbesondere soll ein Bereitstellen von Reinigungsflüssigkeit unter verbesserter Nutzung des Bauraums in einem Fahrzeug auf wirtschaftliche Weise ermöglicht werden.

Die Aufgabe, betreffend das Reinigungssystem, wird durch die Erfindung in einem ersten Aspekt mit einem Reinigungssystem des Anspruchs 1 gelöst. Die Erfindung geht aus von einem Sensorreinigungssystem für ein Fahrzeug aufweisend:
- mindestens ein Sensorreinigungsmodul, wobei das Sensorreinigungsmodul eine Ventileinheit aufweist, wobei
- die Ventileinheit ausgebildet ist zum Annehmen von Druckluft über einen Moduldruckluftanschluss und zum selektiven Abgeben des Druckluftreinigungsimpulses über einen Reinigungs-Druckluftanschluss.

Erfindungsgemäß ist bei dem Sensorreinigungssystem vorgesehen, dass
- das Sensorreinigungsmodul einen Modulspeicher und einen Pumpmechanismus aufweist, wobei
- der Modulspeicher ausgebildet ist zum Aufnehmen und zum Speichern der über einen Modulflüssigkeitsanschluss bereitgestellten Reinigungsflüssigkeit, und der fluidführend mit dem Pumpmechanismus verbunden ist, und
- der Pumpmechanismus ausgebildet ist zum Bereitstellen der Reinigungsflüssigkeit in Form des Flüssigkeitsreinigungsimpulses an einem Reinigungs-Fluidanschluss in Abhängigkeit eines Steuerungssignals.

Die Erfindung geht aus von der Überlegung, dass ein Vorhalten einer ausreichend großen Menge an Reinigungsflüssigkeit in einem Sensorreinigungssystem eines Fahrzeugs generell vorteilhaft ist. Hierbei hat die Erfindung erkannt, dass eine dezentrale Anordnung mit einem oder mehreren Sensorreinigungsmodulen das Verwalten und Bereitstellen von Reinigungsflüssigkeit insbesondere unter den Betriebs- und Randbedingungen eines Fahrzeugs verbessert ermöglicht.

Dadurch, dass ein Sensorreinigungsmodul einen Modulspeicher aufweist, kann Reinigungsflüssigkeit unabhängig von einem zentralen Speicher aufgenommen und gespeichert werden. Somit kann durch das Konzept eines Modulspeichers Reinigungsflüssigkeit oder Flüssigkeit dezentral, nämlich in den einzelnen Sensorreinigungsmodulen, gespeichert und bei Bedarf abgegeben werden. Im Unterschied zu einem relativ großen zentralen Speicher kann ein Sensorreinigungsmodul mit einem Modulspeicher aufgrund des geringeren benötigten Bauraums näher an einer Reinigungsdüse bzw. einem zu reinigenden Sensor angeordnet werden, wodurch die Leitungen und dadurch die Reaktionszeiten vorteilhaft verkürzt werden. Ein Vorteil von dezentral angeordneten Modulspeichern besteht darin, dass durch die Nähe zwischen Modulspeicher und dem Pumpmechanismus die Reinigungsflüssigkeit über relativ kurze Strecken angesaugt werden kann. Dadurch wird das Sensorreinigungsmodul und damit die Sensoroberfläche schneller mit Reinigungsflüssigkeit versorgt. Gleichzeitig sinkt das Risiko, dass Luft angesaugt wird oder in das, Reinigungsflüssigkeit führende, Fluidsystem, insbesondere in die Düsen-Flüssigkeitsleitung, gelangt. Auch können durch ein Sensorreinigungssystem mit nahe an den jeweils zu versorgenden Reinigungsdüsen angeordneten Sensorreinigungsmodulen, und die dadurch kürzer ausführbaren Düsen-Druckluftleitungen und/oder Düsen-Flüssigkeitsleitungen, Druckverluste reduziert werden, wodurch vorteilhaft möglichst starke Reinigungsimpulse erreicht werden.

Ein Pumpmechanismus kann dabei breit verstanden werden als eine Vorrichtung zum Fördern und/oder Verdichten von Flüssigkeit, insbesondere als eine mechanische, hydraulische, pneumatische oder elektrische Pumpvorrichtung. Das Steuerungssignal kann dabei entsprechend der Art des Pumpmechanismus ausgebildet sein, insbesondere als ein elektrisches, pneumatisches oder mechanisches Steuersignal.

Ein erfindungsgemäßes Sensorreinigungssystem mit mindestens einem Sensorreinigungsmodul ermöglicht eine dezentrale Architektur zum dezentralen Einsammeln von Flüssigkeit und/oder dezentralen Abgeben von Flüssigkeit, insbesondere da einzelne Sensorreinigungsmodule jeweils mit einem Modulspeicher in der Nähe sowohl von Flüssigkeitsquellen als auch von Flüssigkeitsverbrauchern angeordnet werden können. Durch den modularen Aufbau mit Sensorreinigungsmodulen eignet sich ein erfindungsgemäßes Sensorreinigungssystem auch zum Nachrüsten in ein bestehendes Fahrzeug.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren

Erfindungsgemäß ist vorgesehen, dass der Pumpmechanismus druckluftbetrieben ist, wobei der Pumpmechanismus druckluftbetrieben ist, wobei das Steuerungssignal als ein Druckluftsteuerungssignal ausgebildet ist, und die Ventileinheit ausgebildet ist zum selektiven Abgeben des Druckluftsteuerungssignals über einen Steuerungs-Druckluftanschluss. Eine derartige Anordnung schließt die Erkenntnis ein, dass ein druckluftbetriebener Pumpmechanismus eine vorteilhafte Möglichkeit zur selektiven Bereitstellung eines Flüssigkeits-Reinigungsimpulses darstellt, da insbesondere die Anzahl von hydraulischen Ventilen und dergleichen Schaltmittel zum Schalten von Flüssigkeiten, die in der Regel relativ kostenintensiv und fehleranfällig sind, vorteilhaft reduziert werden kann. Mittels eines druckluftbetriebenen Pumpmechanismus kann die selektive Bereitstellung eines Flüssigkeits-Reinigungsimpulses vorteilhaft mit dem Schalten von Druckluftströmungen, insbesondere eines Druckluftsteuerungssignals über das Schaltventil, erfolgen. Ein druckluftbetriebener Pumpmechanismus kann vorteilhaft in einem Sensorreinigungssystem gemäß dem Konzept der Erfindung mit nahe an den jeweils zu versorgenden Reinigungsdüsen angeordneten Sensorreinigungsmodulen eingesetzt werden, da die dadurch kürzer ausführbaren Düsen-Flüssigkeitsleitungen einen relativ geringen Druckverlust der erzeugten Flüssigkeits-Reinigungsimpulse zur Folge haben.

Im Rahmen einer Weiterbildung ist vorgesehen, dass der druckluftbetriebene Pumpmechanismus einen Kolben mit einer Luftkammer und einer Flüssigkeitskammer aufweist, die durch einen axial beweglichen Stempel fluiddicht voneinander getrennt sind. Der Stempel ist mit einer Rückstellfeder mit einem Gehäuse des Kolbens verbunden, wobei die Rückstellfeder bei einer Druckbeaufschlagung der Luftkammer zum Abgeben des Flüssigkeitsreinigungsimpulses gegen eine Rückstellkraft aus ihrer Ruheposition gelenkt wird und bei Abfallen des Drucks wieder entspannt zum Ansaugen der Reinigungsflüssigkeit.

Im Rahmen einer Weiterbildung ist vorgesehen, dass das Sensorreinigungsmodul eine Modulsteuereinheit aufweist, die ausgebildet ist zum Steuern der Ventileinheit, insbesondere in Abhängigkeit eines von einer Fahrzeugsteuereinheit des Fahrzeugs bereitgestellten Steuersignals und/oder dass das Sensorreinigungssystem eine Vorrichtungssteuereinheit aufweist, die ausgebildet ist zum Steuern der Ventileinheiten des mindestens einen, insbesondere sämtlicher, Sensorreinigungsmodule des Sensorreinigungssystems, insbesondere in Abhängigkeit eines von einer Fahrzeugsteuereinheit des Fahrzeugs bereitgestellten Steuersignals. In Weiterbildungen, in denen ein Sensorreinigungsmodul eine Modulsteuereinheit aufweist, besitzt ein Sensorreinigungsmodul einen gewissen Grad an Autonomie und kann, insbesondere mit anderen Sensorreinigungsmodulen und/oder mit einer Fahrzeugsteuereinheit, kommunizieren. In Weiterbildungen, in denen das Sensorreinigungssystem eine Vorrichtungssteuereinheit, können die einzelnen Sensorreinigungsmodule zentral gesteuert werden. In Weiterbildungen, in denen das Sensorreinigungssystem keine Modulsteuereinheit und auch keine Vorrichtungssteuereinheit aufweist, können die Ventileinheiten der Sensorreinigungsmodule direkt von einer Fahrzeugsteuereinheit gesteuert werden.

Im Rahmen einer Weiterbildung ist mindestens eine luft- und/oder fluidführend mit dem Sensorreinigungsmodul verbundene Reinigungsdüse vorgesehen, die ausgebildet ist zum Beaufschlagen einer Sensoroberfläche mit einem Flüssigkeitsreinigungsimpuls und/oder einem Druckluftreinigungsimpuls. Insbesondere kann eine Anzahl von mehreren Reinigungsdüsen mit einem Sensorreinigungsmodul verbunden sein. Insbesondere kann eine Reinigungsdüse für eine Sensoroberfläche vorgesehen sein.

Im Rahmen einer Weiterbildung ist mindestens ein weiteres Sensorreinigungsmodul vorgesehen, wobei das Sensorreinigungsmodul und das mindestens eine weitere Sensorreinigungsmodul über eine Austauschleitung bidirektional fluidführend verbunden sind und/oder über eine Steuerleitung bidirektional signalführend verbunden sind.

Das weitere oder die weiteren Sensorreinigungsmodul weisen jeweils einen weiteren Modulspeicher zum Speichern von Reinigungsflüssigkeit auf. In Weiterbildungen mit zwei oder mehr Sensorreinigungsmodulen kann vorteilhaft die dezentrale Architektur des Sensorreinigungssystem genutzt werden, insbesondere das dezentrale Speichern von Reinigungsflüssigkeit und Austauschen von Reinigungsflüssigkeit zwischen den Sensorreinigungsmodulen. Auch können vorteilhaft Sensorreinigungsmodule in die Nähe der zu reinigenden Sensoren angeordnet werden, was die Leitungslängen zwischen Sensorreinigungsmodul und Reinigungsdüsen reduziert und insbesondere die Reaktionszeit und Druckverluste verringert, weil die Reinigungsimpulse einen kürzeren Weg zurücklegen.

Im Rahmen einer Weiterbildung ist vorgesehen, dass das Sensorreinigungsmodul einem, insbesondere im Frontbereich des Fahrzeugs angeordneten, ersten Sensorcluster mit einer Anzahl von örtlich zusammenliegenden Reinigungsdüsen für mindestens einen, insbesondere für jeweils einen, Sensor zugeordnet ist und das weitere das Sensorreinigungsmodul einem, insbesondere im Heckbereich des Fahrzeugs angeordneten, zweiten Cluster mit einer Anzahl von örtlich zusammenliegenden Reinigungsdüsen für mindestens einen, insbesondere für jeweils einen, Sensor zugeordnet ist. "örtlich zusammenliegend" bedeutet insbesondere dass Abstand und/oder Leitungslänge der Leitung oder der Leitungen zwischen einem Sensorreinigungsmodul und den damit verbundenen Reinigungsdüsen, insbesondere die Leitungslänge der Düsen-Flüssigkeitsleitung und/oder der Düsen-Druckluftleitung, kleiner als 1 m, bevorzugt kleiner als 50 cm ist. In anderen Weiterbildungen können Sensorreinigungsmodul vorgesehen werden, um andere oder zusätzliche Cluster von örtlich zusammenliegenden Reinigungsdüsen zu versorgen.

Im Rahmen einer Weiterbildung ist vorgesehen, dass von der Modulsteuereinheit des Sensorreinigungsmoduls und einer weiteren Modulsteuereinheit des weiteren Sensorreinigungsmoduls eine Modulsteuereinheit eine Vorrangstellung derart hat, dass - insbesondere im Falle einer begrenzten, das heißt nicht für beide Sensorreinigungsmodule ausreichenden, Menge an Reinigungsflüssigkeit - das Sensorreinigungsmodul, dessen Modulsteuereinheit die Vorrangstellung hat, Zugriff auf die in dem Modulspeicher des anderen Sensorreinigungsmoduls gespeicherte Reinigungsflüssigkeit hat. Eine Vorrangstellung eines Sensorreinigungsmoduls kann insbesondere durch die Modulsteuereinheiten oder eine Fahrzeugsteuereinheit des Fahrzeugs umgesetzt werden, derart, dass ein oder mehrere Sensorreinigungsmodule, die keine Vorrangstellung haben, durch die Modulsteuereinheiten oder die Fahrzeugsteuereinheit abgeschaltet oder nicht angesteuert werden. Das Sensorreinigungsmodul, das eine Vorrangstellung aufweist, ist insbesondere einem oder mehreren Sensoren zugeordnet, die für kritische Fahrfunktionen zuständig sind, das heißt für die Funktionsweise des Fahrzeugs existenziell.

Im Rahmen einer Weiterbildung ist vorgesehen, dass der Modulspeicher fluidführend mit mindestens einer Flüssigkeitsquelle, insbesondere einem Scheibenwischerflüssigkeitstank, einer Brennstoffzelle, einer Regenauffangeinrichtung, einer Kühlanlage einem Lufttrockner und/oder einem weiteren Sensorreinigungsmodul, verbunden ist. In vorteilhaften Weiterbildungen ist der Modulspeicher des Sensorreinigungsmoduls fluidführend mit mehreren Flüssigkeitsquellen verbunden, um eine möglichst hohe Verfügbarkeit von Reinigungsflüssigkeit sicherzustellen. Insbesondere sind Flüssigkeitsquellen, welche im Betrieb des Fahrzeugs Flüssigkeit gewinnen, vorteilhaft für eine hohe Verfügbarkeit von Reinigungsflüssigkeit. Zu derartigen Flüssigkeitsquellen zählen Komponenten des Fahrzeugs, welche beispielsweise über das Einsammeln von Regen und/oder Spritzwasser, oder über das Produzieren von Kondenswasser Reinigungsflüssigkeit gewinnen können. Im einfachsten Fall kann Wasser als Reinigungsflüssigkeit verwendet werden. Durch derartige Flüssigkeitsquellen kann das Zeitintervall bis zu einem notwendig werdenden Auffüllen eines Flüssigkeitstanks vorteilhaft verlängert werden oder es kann sogar vollständig auf ein Nachfüllen eines Flüssigkeitstanks verzichtet werden. Insbesondere ist das Sensorreinigungsmodul tiefer als die Flüssigkeitsquelle angeordnet. Die bedeutet, dass die Flüssigkeitsquelle - vertikal, insbesondere senkrecht zu Straßenoberfläche betrachtet - höher angeordnet ist als das Sensorreinigungsmodul mit dem Modulspeicher, In Weiterbildungen in denen das Sensorreinigungsmodul tiefer als die Flüssigkeitsquelle angeordnet ist, kann vorteilhaft die Schwerkraft zum Befüllen des Modulspeichers genutzt werden, insbesondere auf eine Pumpe oder dergleichen Fördermittel zum Bereitstellen der Reinigungsflüssigkeit für den Modulspeicher verzichtet werden.

Im Rahmen einer Weiterbildung ist eine zum Fördern der Reinigungsflüssigkeit ausgebildete Pumpe vorgesehen, die in einer - das Sensorreinigungsmodul mit mindestens einer Flüssigkeitsquelle fluidführend verbindenden - Flüssigkeitszuleitung oder einer Austauschleitung, angeordnet ist. Eine derartige Pumpe ist vorteilhaft in Weiterbildungen, in welcher ein Höhenunterschied zwischen einer Flüssigkeitsquelle und einem Sensorreinigungsmodul (oder zwischen zwei Sensorreinigungsmodulen) besteht, und die Reinigungsflüssigkeit entgegen der Richtung der Schwerkraft gefördert werden muss.

Im Rahmen einer Weiterbildung ist vorgesehen, dass einem Sensorreinigungsmodul mindestens zwei Reinigungsdüsen, bevorzugt mindestens drei Reinigungsdüsen, zugeordnet sind. Mehrere Reinigungsdüsen können vorteilhaft von einem Sensorreinigungsmodul versorgt werden, insbesondere, wenn sie örtlich zusammenliegend angeordnet sind.

Im Rahmen einer Weiterbildung ist vorgesehen, dass die Reinigungsdüse vom Sensorreinigungsmodul separat angeordnet ist. In derartigen Weiterbildungen können die Reinigungsdüsen über Zuleitungen, insbesondere über eine Flüssigkeits-Düsenleitung und/oder eine Druckluft-Düsenleitung mit dem Sensorreinigungsmodul verbunden werden.

Im Rahmen einer Weiterbildung ist vorgesehen, dass eine Leitungslänge zwischen dem Sensorreinigungsmodul und mindestens einer, insbesondere sämtlichen, mit dem Sensorreinigungsmodul verbundenen Reinigungsdüsen, weniger als 80 cm, bevorzugt weniger als 50 cm, beträgt.

Im Rahmen einer Weiterbildung ist vorgesehen, dass das Sensorreinigungsmodul einen Moduldruckluftspeicher, ausgebildet zum Aufnehmen und zum lokalen Speichern der über den Moduldruckluftanschluss bereitgestellten Druckluft. Ein Moduldruckluftspeicher weist bevorzugt ein Fassungsvermögen zwischen 20 ml und 60 ml, besonders bevorzugt von 40 ml, auf. Ein Moduldruckluftspeicher verringert vorteilhaft die Abhängigkeit von einer Druckluftquelle, insbesondere wenn temporär keine Druckluft verfügbar ist, beispielsweise falls ein Kompressor nach einer längeren Stillstandszeit des Fahrzeugs noch keine Luft fördert.

Im Rahmen einer Weiterbildung ist vorgesehen, dass der Modulspeicher des Sensorreinigungsmoduls ein Fassungsvermögen zwischen 250 ml und 3000 ml, bevorzugt zwischen 250 ml und 1000 ml aufweist. Ein größeres Fassungsvermögen erhöht die Verfügbarkeit von Reinigungsflüssigkeit. Ein geringeres Fassungsvermögen ermöglicht einen kompakteren Aufbau des Sensorreinigungsmoduls und somit eine bessere Anordnung des Sensorreinigungsmoduls in der Nähe der zu reinigenden Sensoren.

Im Rahmen einer Weiterbildung ist vorgesehen, dass das Sensorreinigungsmodul angeordnet und/oder ausgebildet zum Nutzen von Abwärme einer Wärmequelle des Fahrzeugs, insbesondere eine Heizeinrichtung aufweist. Insbesondere ist das Sensorreinigungsmodul an eine Wärmequelle, insbesondere an eine Brennkraftmaschine oder Brennstoffzelle, angrenzend angeordnet oder mittels eines Wärmeleitenden Bauteils mit einer Wärmequelle mechanisch verbunden.

Im Rahmen einer Weiterbildung ist vorgesehen, dass das Sensorreinigungsmodul ein das Sensorreinigungsmodul einfassendes Modulgehäuse, insbesondere aus Kunststoff oder Aluminium oder Aluminiumguss, aufweist. Das Modulgehäuse ist insbesondere aus einem Ventilpatronengehäuse gebildet, mit einem ersten bis dritten Ventileinsatz, wobei jedem Ventileinsatz ein in dem Ventileinsatz angeordnetes, als Patronenventil ausgebildetes Schaltventil zugeordnet ist. Das Modulgehäuse ist insbesondere aus einem eine ausreichend mechanische und thermische Stabilität aufweisenden Material gebildet. Das Modulgehäuse kann eine Anzahl an Ventileinsätzen für die Schaltventile und Raum für weitere Komponenten des Sensorreinigungsmoduls aufweisen. Insbesondere kann das Schaltventil vollständig oder teilweise in Form von einem oder mehreren als Patronenventilen ausgebildeten Schaltventilen ausgebildet sein. Insbesondere kann der druckluftbetriebene Pumpmechanismus vollständig oder teilweise in Form von einem oder mehreren als Patronenventilen ausgebildeten Schaltventilen ausgebildet sein, wobei die als Patronenventile ausgebildeten Schaltventile insbesondere zum Ansteuern eines Druckzylinders ausgebildet sind.

Das Schaltventil ist insbesondere als 2/2-Wege-Ventil ausgebildet, bevorzugt als 2/2-Wege-Magnetventil. Das Ventilpatronengehäuse ist bevorzugt ein Standard-Ventilpatronengehäuse, insbesondere pneumatisches oder hydraulisches bzw. fluidisches Standardbauteil beispielsweise für einen Achsmodulator oder ein Bremssteuergerät.

In derartigen Weiterbildungen, in denen ein Ventilpatronengehäuse das Gehäuse des Sensorreinigungsmoduls bildet, wird der Vorteil einer bauraumsparenden Integration weiter verstärkt, wodurch auch eine bessere Positionierung in Nähe der Düse und allgemein dezentrale Anordnung der Module verbessert erreicht wird. Auch entsteht vorteilhaft eine Kostenersparnis durch die Verwendung von Patronenventilen als Standardbauteile. Die Verwendung eines Ventilpatronengehäuses als Modulgehäuse mit geeigneten Patronenventilen hat weiter den Vorteil, dass bei einem relativ geringen Bauraum konstruktiv relativ große Nennweiten der Ventile realisiert werden können, was eine verbesserte Strömung der Medien, insbesondere einen verbesserten Luftfluss, zur Folge hat. Ein Ventilpatronengehäuse ist insbesondere als ein Block gebildet, in den durch geeignete Bearbeitungsverfahren eine Anzahl von Ventileinsätzen eingebracht ist mit entsprechenden Bohrungen oder dergleichen luft- und/oder fluidführenden Leitungen zwischen den Ventileinsätzen und/oder externen Anschlüssen. Ein Modulspeicher kann insbesondere in dem Ventilpatronengehäuse oder daran befestigt angeordnet sein.

In einer vorteilhaften Weiterbildung sind sämtliche Schaltventile eines Sensorreinigungsmoduls als, insbesondere baugleiche, Patronenventile ausgebildet. Ein Patronenventil kann insbesondere vorteilhaft sowohl als 2/2-Wegeventil oder 3/2-Wegeventil verwendet werden, insbesondere durch Anpassung des Ventileinsatzes, das heißt durch Vorsehen einer entsprechenden Anzahl an Anschlüssen im Ventileinsatz.

Insbesondere weist die Weiterbildung ein Ansaugdruck-Rückschlagventil auf, welches insbesondere am Flüssigkeit-Reinigungsanschluss angeordnet ist und ausgebildet ist, eine Strömung entgegen der Richtung des Flüssigkeit-Reinigungsimpulses zu sperren.

Insbesondere ist - in Weiterbildungen mit Ventilkörpern mit einem nur einseitig abdichtendem Dichtring - mindestens ein Rückschlagventil pro Schaltventil vorgesehen. Im Rahmen einer Weiterbildung mit einem als Ventilpatronengehäuse ausgebildeten Gehäuse ist ein vierter Ventileinsatz mit einem vierten, als Patronenventil ausgebildeten Schaltventil und/oder ein fünfter Ventileinsatz mit einem fünften, als Patronenventil ausgebildeten Schaltventil vorgesehen. Das vierte und fünfte Schaltventil ist insbesondere jeweils zum selektiven Schalten einer oder mehrerer Reinigungsdüsen ausgebildet.

Im Rahmen einer Weiterbildung mit einem als Ventilpatronengehäuse ausgebildeten Gehäuse ist vorgesehen, dass die Ventileinsätze annährend hohlzylindrisch ausgebildet sind und die Schaltventile als Patronenventil jeweils einen Ventilkörper mit mindestens einer ersten und einer zweiten axial benachbart angeordneten Ventilkammer aufweisen, die durch einen druckdicht gegen eine Innenwandung des Ventileinsatzes anliegenden Dichtring mindestens in einer Strömungsrichtung pneumatisch getrennt sind. Bevorzugt ist der Dichtring als beidseitig sperrender Dichtring, insbesondere als beidseitig sperrender O-Ring, ausgebildet. Insbesondere ist der Dichtring für sämtliche Schaltventile als beidseitig sperrender Dichtring ausgebildet. "Beidseitig sperrend" bedeutet, dass weder eine Strömung von der ersten in die zweite Ventilkammer, als auch von der zweiten in die erste Ventilkammer zugelassen wird.

Im Rahmen einer Weiterbildung mit einem als Ventilpatronengehäuse ausgebildeten Gehäuse ist der Pumpmechanismus einschließlich eines Kolbens in das Modulgehäuse integriert.

Im Rahmen einer Weiterbildung mit einem als Ventilpatronengehäuse ausgebildeten Gehäuse ist ein Heizdraht als Heizeinrichtung vorgesehen, der insbesondere von der Modulsteuereinheit versorgt und/oder gesteuert wird.

Im Rahmen einer Weiterbildung ist ein Drucksensor und/oder ein Positionssensor vorgesehen. Der Positionssensor ist insbesondere ausgebildet zum Bestimmen einer Position eines Stempels des Kolbens, wobei der Stempel axial beweglich im Kolben zum variablen Trennen einer Luftkammer und einer Flüssigkeitskammer ausgebildet ist. Ein Drucksensor kann insbesondere an der Luftkammer des Kolbens des Pumpmechanismus vorgesehen sein.

Insbesondere ist vorgesehen, dass ein Fassungsvermögen des Modulspeichers ein Vielfaches, insbesondere ein Zehnfaches, eines Kolbenvolumens eines Kolbens des Pumpmechanismus beträgt.

In einem zweiten Aspekt gibt die Erfindung zur Lösung der Aufgabe weiterhin ein Fahrzeug, insbesondere PKW oder Nutzfahrzeug oder Anhänger, an, aufweisend ein Sensorreinigungssystem gemäß dem ersten Aspekt der Erfindung. Bei dem Fahrzeug gemäß dem zweiten Aspekt der Erfindung werden die Vorteile des Sensorreinigungssystem gemäß dem ersten Aspekt der Erfindung vorteilhaft genutzt.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: Eine schematische Darstellung eines Fahrzeugs mit einem Sensorreinigungssystem gemäß dem Konzept der Erfindung,
- Fig. 2: ein als Pkw ausgebildetes Fahrzeug mit einem Sensorreinigungssystem gemäß dem Konzept der Erfindung,
- Fig. 3: ein als Pkw ausgebildetes Fahrzeug mit einem Sensorreinigungssystem, welches beispielhaft drei unterschiedliche Flüssigkeitsquellen aufweist,
- Fig. 4: zeigt ein als Pkw ausgebildetes Fahrzeug mit einem Sensorreinigungssystem, welches ein Sensorreinigungsmodul 200 und weiteres Sensorreinigungsmodul aufweist,
- Fig. 5: das in Fig. 2 gezeigte Fahrzeug in einer Seitenansicht,
- Fig. 6: ein als Nutzfahrzeug ausgebildetes Fahrzeug mit einem Sensorreinigungssystem gemäß dem Konzept der Erfindung,
- Fig. 7: ein Gespann eines Fahrzeugs, welches neben dem bereits in Fig. 6 gezeigten Nutzfahrzeug einen Anhänger aufweist,
- Fig. 8: schematisch einen Aufbau eines Sensorreinigungsmoduls mit einem Modulgehäuse, welches als Ventilpatronengehäuse ausgebildet ist,
- Fig. 9: auszugsweise ein als Ventilpatronengehäuse ausgebildetes Modulgehäuse in einer Schnittdarstellung,
- Fig. 10A, 10B: ein als 2/2-Wegeventil ausgebildetes, bevorzugtes Schaltventil in einer Schnittansicht,
- Fig. 11A, 11B: ein weiteres bevorzugtes Schaltventil in Form eines 3/2-Wegeventils,
- Fig. 12: eine weitere Ausführungsform eines Sensorreinigungsmodul, die im Unterschied zu der in Fig. 8 gezeigten Ausführungsform Ventilkörper aufweist, welche anstelle des lediglich einseitig dichtenden Dichtrings einen beidseitig abdichtenden O-Ring aufweist,
- Fig. 13: eine weitere Ausführungsform eines Sensorreinigungsmoduls, welches im Unterschied zu dem in Fig. 12 dargestellten Sensorreinigungsmodul eine Heizeinrichtung in Form eines Heizdrahtes aufweist,
- Fig. 14: eine weitere Ausführungsform eines Sensorreinigungsmodul, welches im Unterschied zu dem in Fig. 12 dargestellten Sensorreinigungsmodul zwei weitere Schaltventile, nämlich ein viertes Schaltventil und ein fünftes Schaltventil aufweist.

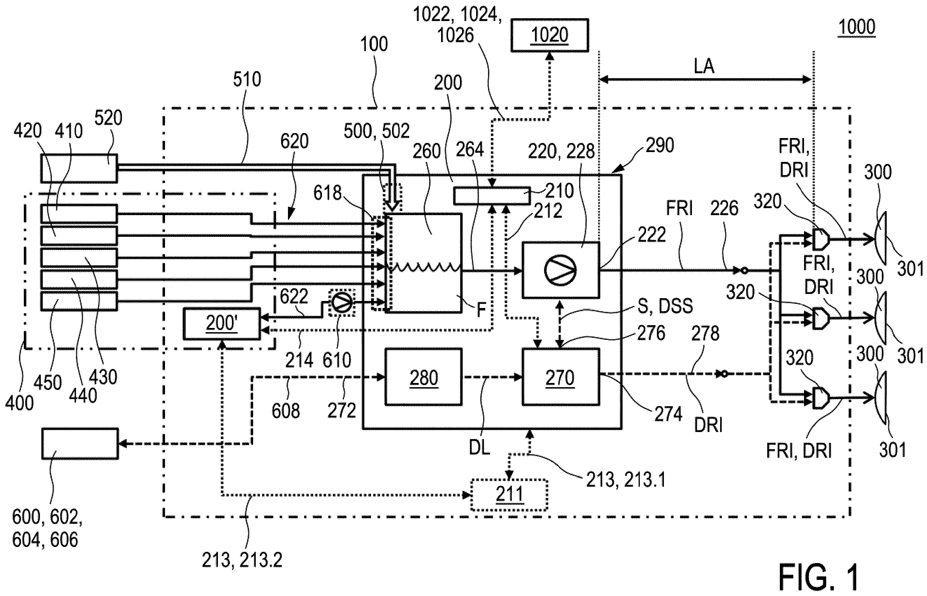

Fig. 1 zeigt eine schematische Darstellung eines Fahrzeugs 1000 mit einem Sensorreinigungssystem 100 gemäß dem Konzept der Erfindung. Das Fahrzeug 1000 ist dahingehend vereinfacht dargestellt, dass nur die für das Sensorreinigungssystem 100 relevanten Teile gezeigt sind.

Das Sensorreinigungssystem 100 weist mindestens ein Sensorreinigungsmodul 200 auf. Das Sensorreinigungsmodul 200 ist ausgebildet, eine oder mehrere Reinigungsdüsen 320 mit Druckluft DL in Form von Druckluftreinigungsimpulsen DRI und/oder Reinigungsflüssigkeit F in Form von Flüssigkeitsreinigungsimpulsen FRI zu versorgen. Vorliegend sind drei Reinigungsdüsen 320 gezeigt, die jeweils einer Sensoroberfläche 300 eines Sensors 301 zugeordnet sind. Gleichwohl sind Ausführungsformen möglich, bei denen mehrere Reinigungsdüsen 320 einer Sensoroberfläche 300, oder auch eine Reinigungsdüse 320 mehreren Sensoroberflächen 300 zugeordnet sind.

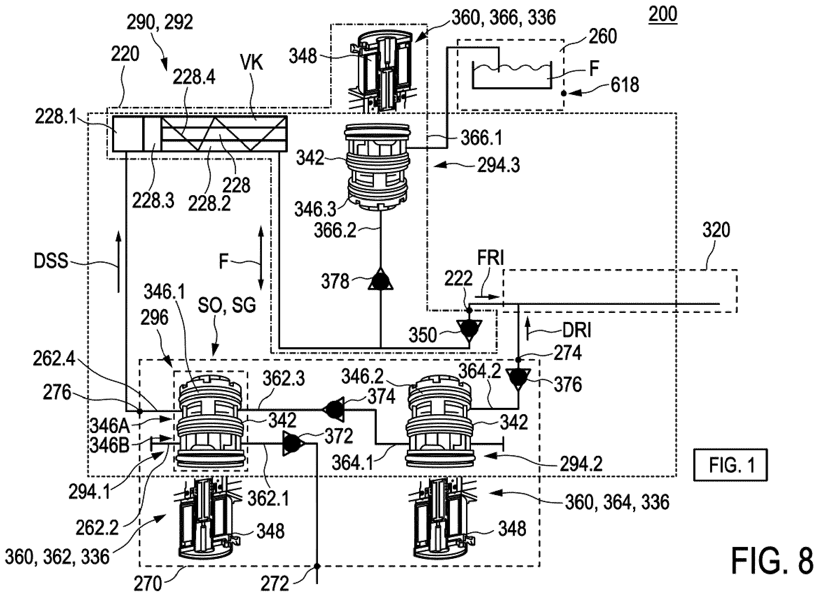

Das Sensorreinigungsmodul 200 weist einen Pumpmechanismus 220 in Form eines druckluftbetriebenen Pumpmechanismus mit einem Kolben 228 auf, welcher ausgebildet ist, Reinigungsflüssigkeit F von einem Modulspeicher 260 über eine Speicherleitung 264 anzunehmen und - auf Basis eines von einer Ventileinheit 270 bereitgestellten, als Druckluftsteuerungssignals DSS ausgebildeten Steuerungssignal S - über einen Reinigungs-Flüssigkeitsanschluss 222 und eine Düsen-Flüssigkeitsleitung 226 in Form eines Flüssigkeitsreinigungsimpulses FRI der Reinigungsdüse 320 bereitzustellen. Der Pumpmechanismus ist insbesondere identisch mit dem in Fig. 8 gezeigten Pumpmechanismus, weshalb bezüglich der näheren Funktionsweise auf Fig. 8 verwiesen wird. In anderen Ausführungsformen kann der Pumpmechanismus in anderer Weise ausgebildet sein, beispielsweise als elektrische Pumpe oder der gleichen Fördereinrichtung.

Die Ventileinheit 270 des Sensorreinigungsmoduls 200 ist weiterhin ausgebildet, über einen Moduldruckluftanschluss 272 bereitgestellte Druckluft DL über einen Reinigungs-Druckluftanschluss 274 und eine Düsen-Druckluftleitung 278 in Form eines Druckluftreinigungsimpulses DRI der Reinigungsdüse 320 bereitzustellen.

Die Ventileinheit 270 kann somit einerseits einen Druckluftreinigungsimpuls DRI über den Reinigungs-Druckluftanschluss 274 bereitstellen, und andererseits ein Druckluftsteuerungssignal DSS zum Steuern des Pumpmechanismus 220 über einen Steuerungs-Druckluftanschluss 276 bereitstellen.

Die Ventileinheit 270 weist eine hier nicht näher dargestellte Anzahl von Schaltventilen auf, welche über eine Modulsteuereinheit 210 gesteuert werden. Die Modulsteuereinheit 210 ist hierzu elektronisch signalführend über eine Modulsteuerleitung 212 mit der Ventileinheit 270 verbunden.

In alternativen Ausführungsformen kann alternativ oder zusätzlich optional eine Vorrichtungssteuereinheit 211 vorgesehen werden, welche über eine Vorrichtungssteuerleitung 213, vorliegend über eine erste Vorrichtungssteuerleitung 213.1 und eine zweite Vorrichtungssteuerleitung 213.2, mit den Ventileinheiten 270, 270' der einzelnen Sensorreinigungsmodule 200, 200' signalführend zum Steuern verbunden sind, insbesondere in Abhängigkeit eines von einer Fahrzeugsteuereinheit 1020 des Fahrzeugs 1000 bereitgestellten Steuersignals 1022.

Der Modulspeicher 260 ist zum Speichern der Reinigungsflüssigkeit F ausgebildet und weist zur Aufnahme neuer Reinigungsflüssigkeit F mindestens einen Modulflüssigkeitsanschluss 618 auf. Die im Modulspeicher 260 gespeicherte Reinigungsflüssigkeit F kann über die Speicherleitung 264 an den Pumpmechanismus 220 geleitet werden.

Der Modulflüssigkeitsanschluss 618 ist über mindestens eine Flüssigkeitszuleitung 620 fluidführend mit einer Flüssigkeitsquelle 400 verbunden. Als Flüssigkeitsquelle 400 können eine oder mehrere der folgenden, hier gezeigten Komponenten dienen: ein Scheibenwischerflüssigkeitstank 410, eine Brennstoffzelle 420, eine Regenauffangeinrichtung 430, eine Kühlanlage 440, ein Lufttrockner 450 und/oder ein oder mehrere weitere Sensorreinigungsmodule 200'. Weitere Komponenten eines Fahrzeugs, bei denen Flüssigkeit gewonnen wird oder als Beiprodukt entsteht, können im Rahmen der Erfindung vorteilhaft als Flüssigkeitsquelle 400 genutzt werden. Insbesondere können im Rahmen der Erfindung unterschiedliche Sensorreinigungsmodule 200, 200' eines Sensorreinigungssystem 100 jeweils mit unterschiedlichen Arten von Flüssigkeitsquellen 400 verbunden sein. Auch können im Rahmen der Erfindung in einem Sensorreinigungssystem 100 eine erste Menge von Sensorreinigungsmodulen 200 mit Flüssigkeitsquellen 400, und eine zweite Menge von Sensorreinigungsmodulen 200 mit Reinigungsdüsen 320 verbunden sein, sodass die erste Menge zur Versorgung von Reinigungsflüssigkeit F, und die zweite Menge zur Reinigung von Sensoroberflächen 300 ausgebildet sind.

Die vorliegend zum weiteren Sensorreinigungsmodul 200' führende Flüssigkeitszuleitung 620 ist als bidirektionale Austauschleitung 622 ausgebildet. Hierdurch wird vorteilhaft ein Austausch von Reinigungsflüssigkeit F zwischen einzelnen Sensorreinigungsmodulen 200, 200' bei Bedarf ermöglicht. Die Austauschleitung 622 kann optional eine Pumpe 610 zum Fördern der Reinigungsflüssigkeit F aufweisen. Die Pumpe 610 kann zum Fördern der Reinigungsflüssigkeit F in eine oder beide Richtungen ausgebildet sein.

Das Sensorreinigungsmodul 200 kann optional einen Moduldruckluftspeicher 280 aufweisen zum lokalen Speichern von Druckluft DL im Sensorreinigungsmodul 200. Hierzu kann der Moduldruckluftspeicher 280 pneumatisch zwischen dem Moduldruckluftanschluss 272 und der Ventileinheit 270 angeordnet sein.

Druckluft DL kann über eine Druckluftquelle 600, insbesondere einen Kompressor 602 oder einen zentralen Druckluftspeicher 604 einer Druckluftversorgungsanlage 606, am Moduldruckluftanschluss 272 bereitgestellt werden.

Das Sensorreinigungsmodul 200 kann optional einer Heizeinrichtung 500 aufweisen. Die Heizeinrichtung 500 kann beispielsweise über einen Wärmetauscher 502 gebildet sein, welcher zur Aufnahme von Abwärme 510 einer Wärmequelle 520 ausgebildet ist. Als Wärmequelle 520 kann beispielsweise eine Brennkraftmaschine des Fahrzeugs 1000 dienen. Der Wärmetauscher 501 kann im einfachsten Fall durch eine von der Abwärme 510 angeströmte oder mit der Wärmequelle 520 in Kontakt stehende Oberfläche gebildet sein. Auch kann die Heizeinrichtung 500 als elektrische Heizeinrichtung, mit einem oder mehreren Heizdrähten, ausgebildet sein.

Die Modulsteuereinheit 210 ist über eine Zentralsteuerleitung 1024 mit einer Fahrzeugsteuereinheit 1020 signalführend verbunden, insbesondere zur Übermittlung eines Steuersignals 1022. Die Zentralsteuerleitung 1024 kann insbesondere in Form eines Fahrzeugbus 1026 gebildet sein oder Teil eines Fahrzeugbus 1026 sein.

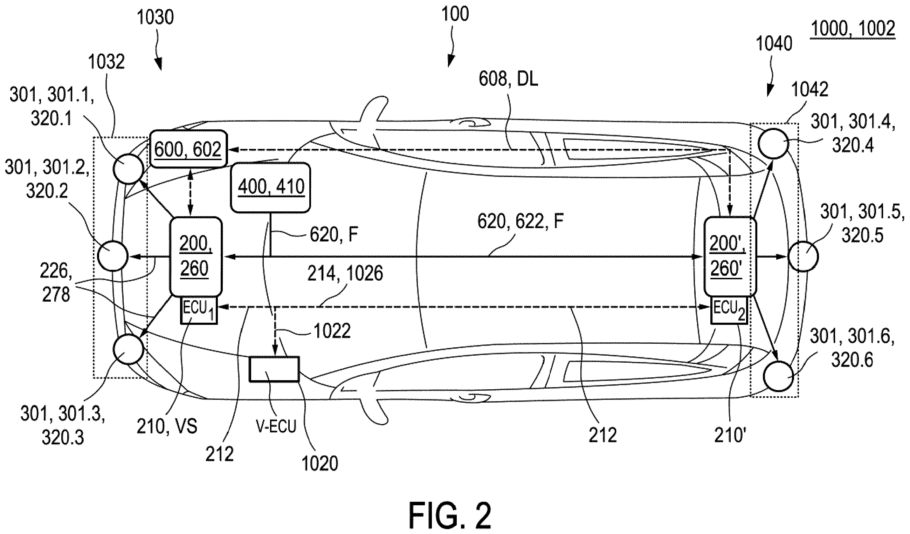

Fig. 2 zeigt ein als Pkw 1002 ausgebildetes Fahrzeug 1000 mit einem Sensorreinigungssystem 100 gemäß dem Konzept der Erfindung. Das Sensorreinigungssystem 100 weist in einem Frontbereich 1030 des Fahrzeugs 1000 ein Sensorreinigungsmodul 200 zur Versorgung eines Frontclusters 1032 von Reinigungsdüsen 320 auf. Die Reinigungsdüsen 320 des Frontclusters 1032 sind örtlich zusammenliegend, nämlich im Frontbereich 1030 des Fahrzeugs 1000, angeordnet. Das Frontcluster 1032 umfasst eine erste Reinigungsdüse 320.1 zur Reinigung eines ersten Sensors 301.1, eine zweite Reinigungsdüse 320.2 zur Reinigung eines zweiten Sensors 301.2 und eine dritte Reinigungsdüse 320.3 zur Reinigung eines dritten Sensors 301.3. Dadurch, dass die Reinigungsdüsen 320.1, 320.2, 320.3 örtlich zusammenliegend in einem Cluster angeordnet sind, können sie vorteilhaft von einem Sensorreinigungsmodul 200 gemeinsam versorgt werden, insbesondere, weil eine Düsen-Flüssigkeitsleitung 226 und eine Düsen-Druckluftleitung 278 ausreichend kurz gehalten werden können.

Das Sensorreinigungssystem 100 weist in einem Heckbereich 1040 des Fahrzeugs 1001 weiteres Sensorreinigungsmodul 200' zur Versorgung eines Heckclusters 1042 von Reinigungsdüsen 320 auf. Die Reinigungsdüsen 320, nämlich eine vierte Reinigungsdüse 320.4 zur Reinigung eines vierten Sensors 301.4, eine fünfte Reinigungsdüse 320.5 zur Reinigung eines fünften Sensors 301.5 und eine sechste Reinigungsdüse 320.6 zur Reinigung eines sechsten Sensors 301.6, sind örtlich zusammenliegend, nämlich im Heckbereich 1040 angeordnet.

Eine Modulsteuereinheit 210 des Sensorreinigungsmoduls 200 und eine weitere Modulsteuereinheit 210' des weiteren Sensorreinigungsmoduls 200' sind jeweils über eine Modulsteuerleitung 212 mit einer Fahrzeugsteuerung 1020, insbesondere zur Übermittlung eines Steuersignals 1022, signalführend verbunden. Weiterhin stehen die Modulsteuereinheit 210 und die weitere Modulsteuereinheit 210' über eine Modulkommunikationsleitung 214 signalführend in Verbindung. Die Modulsteuerleitung 212 und/oder die Modulkommunikationsleitung 214 können als Teil des Fahrzeugbus 1026 gebildet sein.

Das Fahrzeug 1000 weist weiter einen Scheibenwischerflüssigkeitstank 410 als Flüssigkeitsquelle 400 auf, welcher über eine Flüssigkeitszuleitung 620 zum Bereitstellen einer Reinigungsflüssigkeit F mit dem Sensorreinigungsmodul 200 und dem Sensorreinigungsmodul 200' fluidführend verbunden ist.

Weiterhin sind das Sensorreinigungsmodul 200 und das weitere Sensorreinigungsmodul 200' über eine Austauschleitung 622 zum Austauschen von Reinigungsflüssigkeit F fluidführend miteinander verbunden. Die Flüssigkeitszuleitung 620 und die Austauschleitung 622 können teilweise oder vollständig als gemeinsame Leitung ausgebildet sein.

Das Fahrzeug 1000 weist weiter einen Kompressor 602 als Druckluftquelle 600 auf, um das Sensorreinigungsmodul 200 und das weitere Sensorreinigungsmodul 200' über eine Druckluftleitung 608 mit Druckluft DL zu versorgen.

Weiter ist in Fig. 2 beispielhaft eine Vorrangstellung VS für die Modulsteuereinheit 210 gezeigt, welche dem Sensorreinigungsmodul 200 eine Priorisierung gegenüber dem weiteren Sensorreinigungsmodul 200' einräumt. Dies bedeutet, dass bei einem begrenzten Vorrat an Reinigungsflüssigkeit F das Sensorreinigungsmodul 200 bevorzugt mit dieser versorgt wird, und somit auch über die Austauschleitung 622 die in dem weiteren Modulspeicher 260' des weiteren Sensorreinigungsmoduls 200' gespeicherte Reinigungsflüssigkeit F beziehen kann. Das Sensorreinigungssystem 100 kann insbesondere ausgebildet sein, dass ein weiniger priorisiertes Sensorreinigungsmodul 200, insbesondere ein Sensorreinigungsmodul 200 ohne Vorrangstellung VS, abgeschaltet und/oder nicht angesteuert wird, wenn in der Flüssigkeitsquelle 400 nur noch eine geringe Menge an Reinigungsflüssigkeit vorhanden ist.

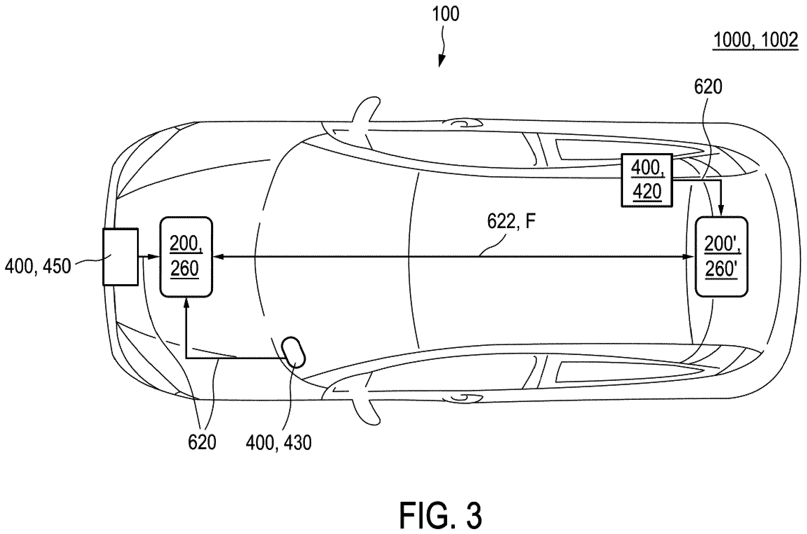

Fig. 3 zeigt ein als Pkw 1002 ausgebildetes Fahrzeug 1000 mit einem Sensorreinigungssystem 100, welches beispielhaft drei unterschiedliche Flüssigkeitsquellen 400 aufweist. Dabei sollte es klar sein, dass im Rahmen der Erfindung auch weitere und/oder andere Flüssigkeitsquellen 400 in einem Sensorreinigungssystem 100 eingesetzt werden können. Insbesondere erlaubt die dezentrale Architektur des Sensorreinigungssystems 100 mit Sensorreinigungsmodulen 200, 200' vorteilhaft die Integration und Nutzung mehrerer unterschiedlicher Flüssigkeitsquellen 400 für ein vorteilhaftes Sammeln von Flüssigkeit und Reinigungsflüssigkeit F, wobei die Reinigungsflüssigkeit F durch Austauschleitungen 622 zwischen den Sensorreinigungsmodulen 200, 200' untereinander ausgetauscht werden kann. Eine Reinigungsflüssigkeit F kann im einfachsten Fall durch Wasser, beispielsweise Regenwasser oder Kondenswasser, gebildet sein.

Vorliegend weist das Fahrzeug 1001 Sensorreinigungsmodul 200 auf, welches über eine Flüssigkeitszuleitung 620 mit einer als Lufttrockner 450 ausgebildeten Flüssigkeitsquelle 400 verbunden ist. Der Lufttrockner 450 kann insbesondere Teil einer Druckluftversorgungsanlage sein. Im Betrieb der Druckluftversorgungsanlage fällt im Lufttrockner 450, insbesondere während einer Regeneration, Kondenswasser an, welches vorteilhaft in einem (hier nicht dargestellten) Modulspeicher 260 des Sensorreinigungsmodul 200 gespeichert und als Reinigungsflüssigkeit F im Sensorreinigungssystem 100 eingesetzt werden kann.

Das Sensorreinigungsmodul 200 ist weiterhin über eine Flüssigkeitszuleitung 620 mit einer Regenauffangeinrichtung 430 als Flüssigkeitsquelle 400 fluidführend verbunden. Über die Regenauffangeinrichtung 430 kann Regenwasser gesammelt werden, wenn es regnet, und in dem Modulspeicher 260 des Sensorreinigungsmoduls 200 gespeichert werden.

Das Sensorreinigungssystem 100 weist ein weiteres Sensorreinigungsmodul 200' auf, welches über eine Flüssigkeitszuleitung 620 mit einer als Brennstoffzelle 420 ausgebildeten Flüssigkeitsquelle fluidführend verbunden ist. Beim Betrieb der Brennstoffzelle 420, welche primär dem Antrieb des Fahrzeugs 1000 dient, fällt im Betrieb Wasser an, welches vorteilhaft in einem weiteren Modulspeicher 260' (hier nicht dargestellt) des weiteren Sensorreinigungsmoduls 200' gespeichert und dem Sensorreinigungssystem 100 als Reinigungsflüssigkeit F zur Verfügung gestellt werden kann.

Das Sensorreinigungsmodul 200 und das weitere Sensorreinigungsmodul 200' sind über eine Austauschleitung 622 fluidführend zum Austausch von Reinigungsflüssigkeit F miteinander verbunden. Auf diese Weise kann vorteilhaft ein Sensorreinigungsmodul 200, 200' von einem anderen Sensorreinigungsmodul 200, 200' versorgt werden, wenn das andere Sensorreinigungsmodul 200, 200' einen Überschuss an Reinigungsflüssigkeit F zur Verfügung hat. Beispielsweise kann bei anhaltendem Regen und wenn der Modulspeicher 260 des Sensorreinigungsmoduls 200 bereits vollständig gefüllt ist, über die Austauschleitung 622 der weitere Modulspeicher 260' des weiteren Sensorreinigungsmoduls 200' befüllt werden. Analoges gilt für die weiteren Flüssigkeitsquellen 400. Aufgrund der Möglichkeit zur dezentralen Anordnung der Sensorreinigungsmodule 200, 200' kann daher eine möglichst große Anzahl von Flüssigkeitsquellen 400 in das Sensorreinigungssystem 100 eingebunden werden und somit die Verfügbarkeit von Reinigungsflüssigkeit F vorteilhaft erhöht werden.

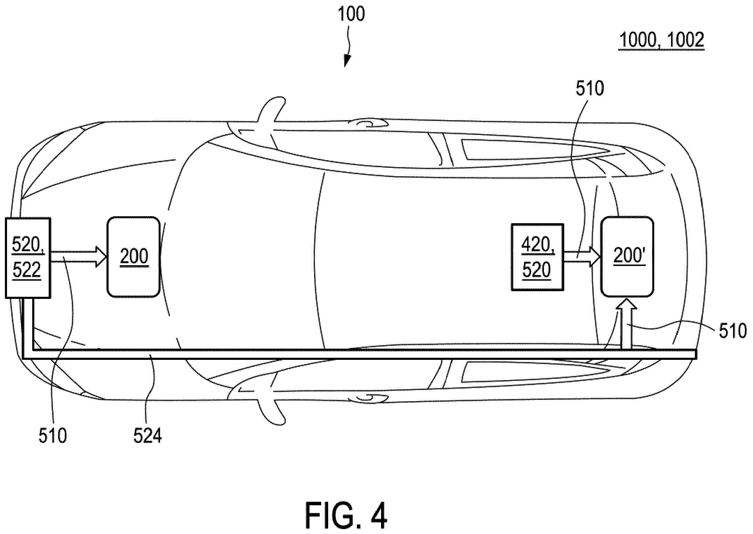

Fig. 4 zeigt ein als Pkw 1002 ausgebildetes Fahrzeug 1000 mit einem Sensorreinigungssystem 100, welches ein Sensorreinigungsmodul 200 und weiteres Sensorreinigungsmodul 200' aufweist. Hierbei sind beispielhaft unterschiedliche Wärmequellen 520 dargestellt zur Verdeutlichung des Konzepts der Nutzung von Abwärme 510. Abwärme 510 kann in unterschiedlichen Komponenten eines Fahrzeuges 1000 entstehen und vorteilhaft zum Erwärmen der Reinigungsflüssigkeit F genutzt werden, insbesondere, wenn Außentemperaturen um den oder unterhalb des Gefrierpunkts liegen. Auch verbessert sich, insbesondere bei Verunreinigungen der Sensoroberfläche mit Fetten und Ölen, die Reinigungsleistung mit einer erwärmten Reinigungsflüssigkeit F. Eine oder mehrere der hier gezeigten Wärmequellen 520 oder weitere Wärmequellen 520 sind selbstverständlich mit anderen hier gezeigten Ausführungsformen kombinierbar. Das Sensorreinigungsmodul 200 ist derart im Fahrzeug angeordnet, dass es Abwärme 510 von einer als Brennkraftmaschine 522 ausgebildeten Wärmequelle 520 empfängt. Hierzu kann es ausreichend sein, dass das Sensorreinigungsmodul 200 in der Nähe der Wärmequelle 520, insbesondere der Brennkraftmaschine 522, angeordnet ist. In anderen Ausführungsformen kann das Sensorreinigungsmodul 200 unmittelbar an die Wärmequelle 520, insbesondere an die Brennkraftmaschine 522 angrenzend angeordnet sein, oder mittels eines geeigneten wärmeleitenden Bauteils mit der Wärmequelle 520, insbesondere der Brennkraftmaschine 522, mechanisch verbunden sein.

Das weitere Sensorreinigungsmodul 200' empfängt in analoger Weise von einer als Brennstoffzelle 420 ausgebildeten Wärmequelle 520 eine Abwärme 510.

Durch eine Anordnung des weiteren Sensorreinigungsmoduls 200' in der Nähe der Brennstoffzelle 420 kann dieses beim Betrieb der Brennstoffzelle 420 entstehende Abwärme 510 zur Erwärmung von Reinigungsflüssigkeit F nutzen.

Alternativ oder zusätzlich kann ein Sensorreinigungsmodul 200 - wie hier beim weiteren Sensorreinigungsmodul 200' gezeigt - Abwärme 510 über ein Abgassystem 524 der Brennkraftmaschine 522 beziehen. Hierzu kann das Sensorreinigungsmodul 200, 200' in der Nähe des Abgassystems 524 angeordnet sein, den von einem Abgasstrom des Abgassystems 544 angestrebt werden. Gleichwohl ist auch hier eine Wärmeübertragung über ein wärmeübertragenes Bauelement und/oder einen Wärmetauscher möglich.

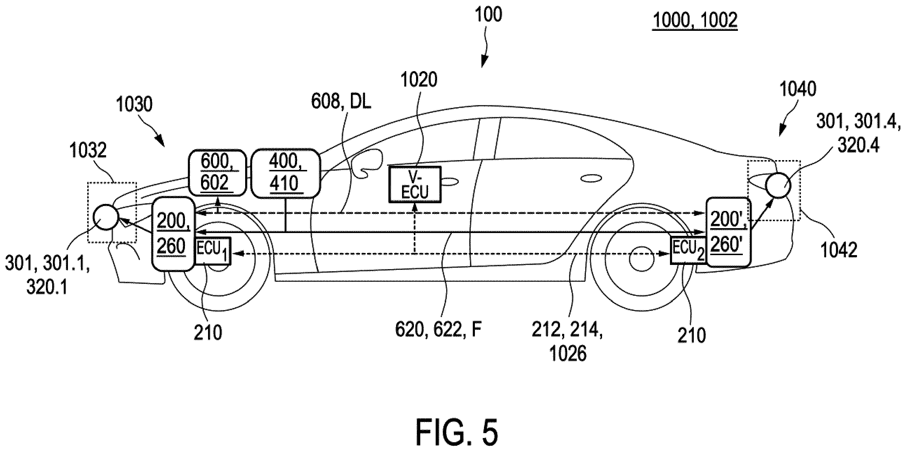

In Fig. 5 ist das in Fig. 2 gezeigte Fahrzeug 1000 in einer Seitenansicht dargestellt. Es ist sichtbar, dass die Flüssigkeitsquelle 400, hier der Scheibenwischerflüssigkeitstank 410, oberhalb der Sensorreinigungsmodule 200, 200' angeordnet ist. Durch diese Anordnung können der Modulspeicher 260 (hier nicht gezeigt) des Sensorreinigungsmodul 200 und der weitere Modulspeicher 260' (ebenfalls nicht gezeigt) des weiteren Sensorreinigungsmoduls 200' vorteilhaft mithilfe der Schwerkraft befüllt werden, da die im Scheibenwischerflüssigkeitstank 410 vorhandene Reinigungsflüssigkeit F abwärts fließend selbstständig über die Flüssigkeitszuleitungen 620, insbesondere ohne eine Pumpe 610 oder dergleichen Fördereinrichtung, in die Modulspeicher 260, 260' gelangt.

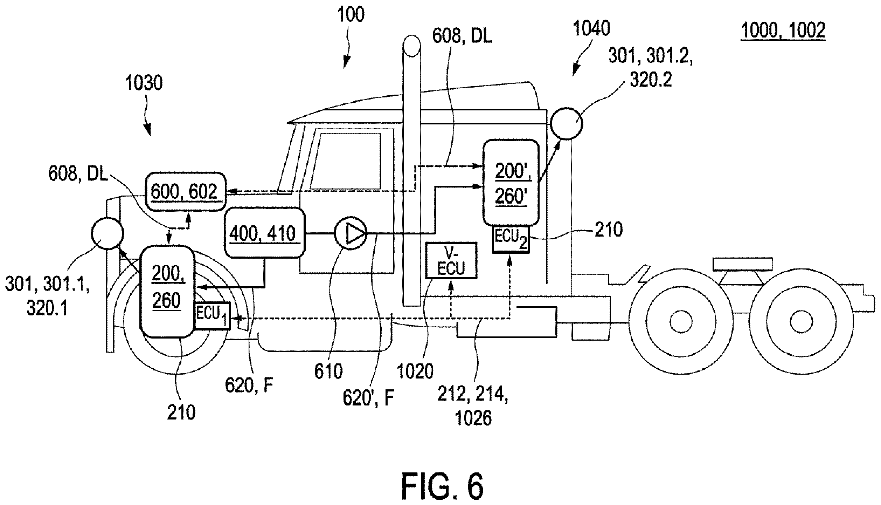

Fig. 6 zeigt ein als Nutzfahrzeug 1004 ausgebildetes Fahrzeug 100 mit einem Sensorreinigungssystem 100 gemäß dem Konzept der Erfindung. Das Sensorreinigungssystem 100 weist ein Sensorreinigungsmodul 200 auf, welches zur Versorgung einer im Frontbereich 1030 des Fahrzeugs 1000 angeordneten, ersten Reinigungsdüse 320.1 zur Reinigung eines ersten Sensors 301.1 angeordnet ist. Gleichwohl können weitere Reinigungsdüsen 320, insbesondere zur Reinigung weiterer Sensoren 301, im Frontbereich 1030 an das Sensorreinigungsmodul 200 zwecks Versorgung angeschlossen werden.

Das Sensorreinigungssystem 100 weist ein weiteres Sensorreinigungsmodul 200' auf zur Versorgung einer im Heckbereich 1040 des Fahrzeugs 1000 angeordneten zweiten Reinigungsdüse 320.2. Die zweite Reinigungsdüse 320.2 dient insbesondere zur Reinigung eines zweiten Sensors 301.2. Gleichwohl können weitere Reinigungsdüse 320.2, insbesondere zur Reinigung weiterer Sensoren 301 an das weitere Sensorreinigungsmodul 200' angeschlossen werden. Weitere, örtlich zusammenliegende Sensoren 301 können zu Clustern zusammengefasst werden, die von einem Sensorreinigungsmodul 200 versorgt werden (hier nicht dargestellt).

Beide Sensorreinigungsmodule 200, 200' werden von einer als Scheibenwischerflüssigkeitstank 410 ausgebildeten Flüssigkeitsquelle 400 mit Reinigungsflüssigkeit F versorgt. Ein Scheibenwischerflüssigkeitstank 410 kann ein Fassungsvermögen von einigen Litern, insbesondere bei einem Nutzfahrzeug von 10 L bis 15 L, aufweisen. Das Sensorreinigungsmodul 200 ist unterhalb des Scheibenwischerflüssigkeitstanks 410 angeordnet, sodass die Reinigungsflüssigkeit F abwärts fließend per Schwerkraft über die Flüssigkeitszuleitung 620 in einen Modulspeicher 260 (hier nicht dargestellt) des Sensorreinigungsmoduls 200 gelangt.

Das weitere Sensorreinigungsmodul 200' ist oberhalb des Scheibenwischerreinigungstanks 410 angeordnet, sodass in einer weiteren Flüssigkeitszuleitung 620' eine Pumpe 610 zur Förderung der Reinigungsflüssigkeit in einen weiteren Modulspeicher 260' (hier nicht dargestellt) des weiteren Sensorreinigungsmoduls 200' angeordnet ist, insbesondere falls das weitere Sensorreinigungsmodul 200' das Wasser nicht selbst ansaugen kann, oder das weitere Sensorreinigungsmodul 200' nicht selbst über eine elektrische Pumpe verfügt oder um die Funktion eines Pumpmechanismus des weiteren Sensorreinigungsmoduls 200' zu unterstützen.

Die beiden Sensorreinigungsmodule 200, 200' werden in bekannter Weise von einer als Kompressor 602 ausgebildeten Druckluftquelle 600 mit Druckluft DL versorgt und sind über jeweilige Modulsteuereinheiten 210, 210' miteinander sowie mit einer Fahrzeugsteuerung 1020 signalführend verbunden.

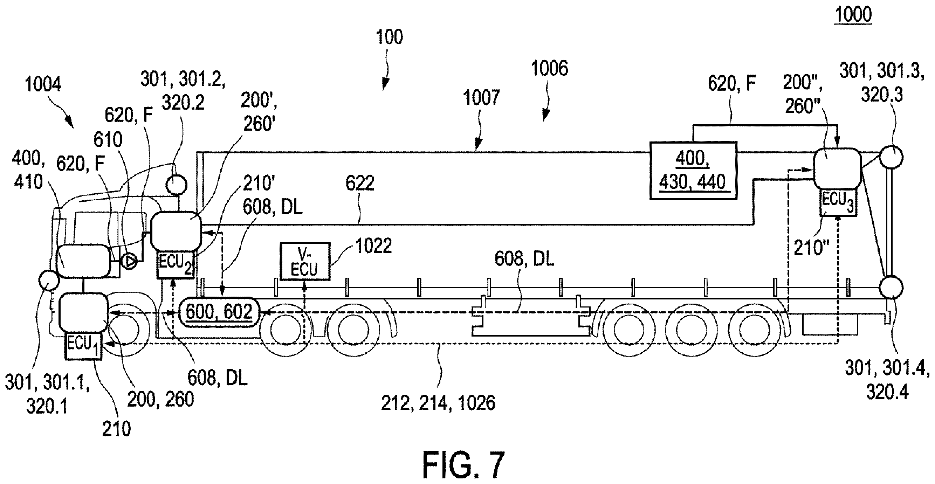

Fig. 7 zeigt ein Gespann eines Fahrzeugs 1000, welches neben dem bereits in Fig. 6 gezeigten Nutzfahrzeug 1004 einen Anhänger 1006 aufweist. Das Sensorreinigungssystem 100 ist somit durch die im Anhänger 1006 angeordneten Komponenten, insbesondere ein noch weiteres Sensorreinigungsmodul 200", erweitert. Dass noch weitere Sensorreinigungsmodul 200" dient der Versorgung eines im Heckbereich des Anhängers 1006 angeordneten Clusters von Reinigungsdüsen 320, nämlich einer dritten Reinigungsdüse 320.3 zur Reinigung eines dritten Sensors 301.3 und einer vierten Reinigungsdüse 320.4 zur Reinigung eines vierten Sensors 301.4. Das noch weitere Sensorreinigungsmodul 200" weist eine noch weitere Modulsteuereinheit 210" auf, welche über eine Modulkommunikationsleitung 214, die insbesondere durch einen Fahrzeugbus 1026 gebildet ist, signalführend mit der Fahrzeugsteuerung 1022 und den weiteren Sensorreinigungsmodulen 200, 200' in Verbindung steht.

Das noch weitere Sensorreinigungsmodul 200" ist fluidführend über eine Flüssigkeitszuleitung 620 mit einer Flüssigkeitsquelle 400 verbunden. Die Flüssigkeitsquelle 400 kann als Regenauffangeinrichtung 430 gebildet sein, die insbesondere vorteilhaft eine relativ große Dachoberfläche 1007 des Anhängers 1006 zum Sammeln von Regenwasser nutzen kann, um das Regenwasser als Reinigungsflüssigkeit F dem noch weiteren Sensorreinigungsmodul 200" zur Verfügung zu stellen und insbesondere in einem noch weiteren Modulspeicher 260" des noch weiteren Sensorreinigungsmoduls 200" zu speichern . Auch kann die Regenauffangeinrichtung 430 alternativ oder zusätzlich ausgebildet sein, Spritzwasser an den Reifen aufzusammeln. Eine Regenauffangeinrichtung 430 kann insbesondere einen Filter oder dergleichen Reinigungsmittel zum Reinigen der Reinigungsflüssigkeit F aufweisen.

Alternativ oder zusätzlich kann eine Flüssigkeitsquelle 400 als eine Kühlanlage 440 ausgebildet sein, welche primär zur Kühlung der im Anhänger 1006 transportierten Güter, insbesondere Lebensmittel, dient und als bei Produkt während des Betriebs Kondenswasser produziert. Dieses Kondenswasser kann gesammelt und dem noch weiteren Sensorreinigungsmodul 200" als Reinigungsflüssigkeit F zur Verfügung gestellt werden.

Optional können die einzelnen Sensorreinigungsmodule 200,200', 200" über eine Austauschleitung 622 miteinander fluidführend verbunden sein. Insbesondere können, wie hier dargestellt, das weitere Sensorreinigungsmodul 200' und das noch weitere Sensorreinigungsmodul 200" über eine Austauschleitung 622 miteinander fluidführend verbunden sein, insbesondere um vorteilhaft die über das noch weitere Sensorreinigungsmodul 200" mittels der Regenauffangeinrichtung 430 und/oder mittels der Kühlanlage 440 gewonnene Reinigungsflüssigkeit F den anderen Sensorreinigungsmodulen, insbesondere dem weiteren Sensorreinigungsmodul 200' zur Verfügung zu stellen.

Fig. 8 zeigt schematisch einen Aufbau eines Sensorreinigungsmoduls 200 mit einem Modulgehäuse 290, welches als Ventilpatronengehäuse 292 ausgebildet ist. Ein Ventilpatronengehäuse 292 bietet den Vorteil einer Standardkomponente, welche in anderen Bereichen pneumatischer oder hydraulischer oder fluidischer Systeme in Fahrzeugen eingesetzt wird und daher kostengünstig zur Verfügung steht. Vorliegend weist das Gehäuse 290 in Form des Ventilpatronengehäuses 292 drei Ventileinsätze 294 auf, nämlich einen ersten Ventileinsatz 294.1, einen zweiten Ventileinsatz 294.2 und einen dritten Ventileinsatz 294.3. In jedem Ventileinsatz 294 ist jeweils ein als Patronenventil 336 ausgebildetes Schaltventil 360 angeordnet, welches vorliegend einen axial in dem Ventileinsatz 294 beweglichen Ventilkörper 346 aufweist, wobei der Ventilkörper 346 von einem Magnetanker 348 selektiv bewegt werden kann. Hierzu ist jeder Magnetanker 348 signalführend mit der - hier nicht dargestellten - Modulsteuereinheit 210 verbunden. Der Ventilkörper 346 jedes Schaltventils 360 weist eine erste Ventilkammer 346A und eine zweite Ventilkammer 346B auf.

Ein Schaltventil 360 kann, wenn es wie hier gezeigt als ein 2/2-Wegeventil ausgebildet ist, je nach Stellung des Ventilkörpers 346, in einer geöffneten Stellung SO oder einer geschlossenen Stellung SG geschaltet sein. Dies wird vorliegend anhand des ersten Schaltventils 362 erläutert. In einer geschlossenen Stellung SG ist ein erster Anschluss 362.1 und ein zweiter Anschluss 362.2 pneumatisch von einem dritten Anschluss 362.3 und einem vierten Anschluss 362.4 getrennt, wobei jedoch der erste und zweite Anschluss 362.1, 362.2 pneumatisch miteinander verbunden sind, sowie der dritte und vierte Anschluss 362.3, 362.4 pneumatisch miteinander verbunden sind. In der vorliegenden Ausführungsform ist die pneumatische Trennung bei sämtlichen Schaltventilen 362, 364, 366 zwischen dem ersten und zweiten Anschluss 362.1, 362.2 auf der einen Seite sowie dem dritten und vierten Anschluss 362.3, 362.4 auf der anderen Seite lediglich einseitig, d. h. dass ein Medium in der geschlossenen Stellung von dem dritten und vierten Anschluss 362.3, 362.4 in Richtung des ersten und zweiten Anschlusses 362.1 und 362.2 strömen kann. Dies ist dadurch bedingt, dass es sich bei den Ventilkörpern um Standardkomponenten handelt, auf ihrem Ventilkörper 346 zwischen der ersten Ventilkammer 346A und der zweiten Ventilkammer 346B einen Dichtring 342 mit einer einseitig sperrenden Dichtlippe aufweist. Diesem Umstand kann dadurch begegnet werden, dass bei jedem Schaltventil an mindestens einem der Anschlüsse, hier beim ersten Schaltventil 362 am ersten Anschluss 362.1, ein Rückschlagventil vorgesehen wird, hier in Form eines ersten Rückschlagventils 372. Durch das erste Rückschlagventil 372 wird verhindert, dass in der geschlossenen Stellung SG des ersten Schaltventils 362 eine Strömung vom dritten und vierten Anschluss 362.3, 362.4 in Richtung des ersten und zweiten Anschlusses 362.1, 362.2 stattfinden kann. In analoger Weise wird ein beidseitiges Abdichten beim zweiten Schaltventil 364 durch ein zweites Rückschlagventil 374 und ein drittes Rückschlagventil 376, und beim dritten Schaltventil 366 durch ein viertes Rückschlagventil 378 gewährleistet.

In einer geöffneten Stellung SO eines Schaltventils 360, hier des Schaltventils 362, sind sämtliche Anschlüsse 362.1, 362.2, 362.3, 362.4 pneumatisch miteinander verbunden.

Das erste Schaltventil 362 und das zweite Schaltventil 364 bilden im Wesentlichen die Ventileinheit 270 des Sensorreinigungsmoduls 200. Wenn sich das erste Schaltventil 362 in seiner geöffneten Stellung SO befindet, wird ein am Moduldruckluftanschluss 272 anliegender Luftdruck an den dritten und vierten Anschluss 362.3, 362.4 weitergeleitet. Dies hat zur Folge, dass die Druckluft DL am vierten Anschluss 362.4 in Form eines Druckluftsteuerungsignals DSS an eine Luftkammer 228.1 eines Kolbens 228 des Pumpmechanismus 220 geleitet wird. Ein Beaufschlagen der Luftkammer 228.1 mit dem Druckluftsteuerungsignal DSS hat eine Expansion der Luftkammer 228.1 zur Folge, was zu einem Verschieben eines axial beweglichen Stempels 228.3 des Kolbens 228 und - damit einhergehend - zu einer Verkleinerung einer Flüssigkeitskammer 228.2 des Kolbens 228 führt. Als Folge dessen entsteht eine Fluidströmung von in der Flüssigkeitskammer 228.2 enthaltenen Reinigungsflüssigkeit F vorbei an einem Ansaugdruck-Rückschlagventil 350 zu einer Reinigungsdüse 320. Entsprechend des Druckluftsteuerungssignals DSS wird die Reinigungsflüssigkeit F als Flüssigkeitsreinigungsimpuls FRI von der Reinigungsdüse 320 in Richtung einer hier nicht dargestellten Sensoroberfläche 300 zwecks Reinigung abgegeben. Das vierte Rückschlagventil 368 verhindert dabei ein Strömen der Reinigungsflüssigkeit F von einem zweiten Anschluss 366.2 des dritten Schaltventils 366 zu einem ersten Anschluss 366.1 des dritten Schaltventils 366. Aufgrund der oben beschriebenen, lediglich einseitig sperrenden Eigenschaft des Dichtrings 342 würde eine solche Strömung sonst selbst in einem geschlossenen Zustand SG des dritten Schaltventils 366 auftreten.

Der am Moduldruckluftanschluss 272 anliegende Luftdruck wird in der geöffneten Stellung SO des ersten Schaltventils 362 ebenfalls am dritten Anschluss 362.3 des ersten Schaltventils 362 bereitgestellt. Von dort gelangt die Druckluft über das zweite Rückschlagventil 374 zu einem ersten Anschluss 364.1 des zweiten Schaltventils 364. In einer geöffneten Stellung S des zweiten Schaltventils 364 wird der erste Anschluss 364.1 mit einem zweiten Anschluss 364.2 des zweiten Schaltventils 364 pneumatisch verbunden, sodass die am Modul Druckluftanschluss 272 anliegende Druckluft DL vom zweiten Anschluss 364.2 des zweiten Schaltventils 264 weiter vorbei an dem dritten Rückschlagventil 376 und einem Reinigung-Druckluftanschluss 274 in Form eines Druckluftreinigungsimpulses DRI an die Reinigungsdüse 320 zwecks Reinigung der Sensoroberfläche 300 weitergeleitet wird.

Auf diese Weise kann durch das entsprechende Schalten des ersten Schaltventils 362 und des zweiten Schaltventils 364 ein selektives Steuern eines Flüssigkeitsreinigungsimpulses FRI und/oder eines Druckluftreinigungsimpulses DRI auf die Reinigungsdüse 320 erfolgen. Insbesondere können Impulsfolgen oder Mediumssequenzen zum Erreichen einer gewünschten Reinigungswirkung in gesteuerter Weise abgegeben werden.

Zum Wiederauffüllen der Flüssigkeitskammer 228.2 des Kolbens 228 kann - insbesondere, wenn das erste Schaltventil 362 in seiner geschlossenen Stellung SG und das zweite Schaltventil 364 in seiner geöffneten Stellung SO ist - das dritte Schaltventil 366 in seine geöffnete Stellung SO geschaltet werden. In dieser Stellung kann die in der Luftkammer 228.1 befindliche Luft über den vierten Anschluss 362.4 und den dritten Anschluss 362.3 des ersten Schaltventils 362 sowie über das zweite Rückschlagventil 374, und über das geöffnete zweite Schaltventil 364 bis hin zur Reinigungsdüse 320 entweichen. Gleichzeitig sorgt eine Rückstellfeder 228.4 dafür, dass der Stempel 228.3 zurückbewegt wird, wodurch sich die Luftkammer 228.1 verkleinert und die Flüssigkeitskammer 228.2 vergrößert. Durch das Vergrößern der Flüssigkeitskammer 228.2 entsteht ein Unterdruck, welcher - bei einem geöffneten dritten Schaltventil 366 - zu einem Ansaugen von Reinigungsflüssigkeit F aus einem Modulspeicher 260 führt, mit welcher sich die Flüssigkeitskammer 228.2 entsprechend füllt. Das Ansaugdruck-Rückschlagventil 350 sperrt dabei die Verbindung zur Reinigungsdüse 320, um ein Abfallen des Unterdrucks zu vermeiden und das Wiederauffüllen der Flüssigkeit, 228.2 zu ermöglichen.

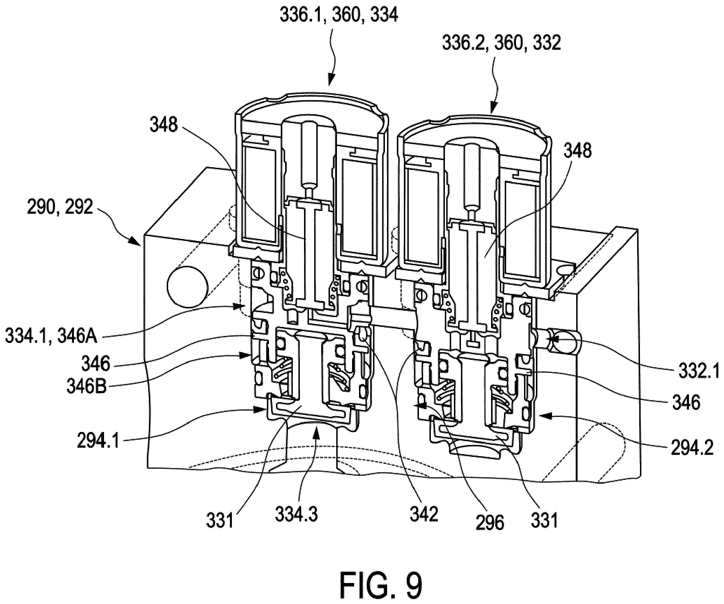

Fig. 9 zeigt ausschnittsweise ein als Ventilpatronengehäuse 292 ausgebildetes Modulgehäuse 290 in einer Schnittdarstellung, in der zwei als Patronenventile 336 ausgebildete Schaltventile 360 sichtbar sind, nämlich ein erstes Patronenventil 336.1 und ein zweites Patronenventil 336.2. Die Patronenventile 336 sind vorteilhaft baugleich ausgebildet mit einem Magnetanker 348, einem Ventilkörper 346 und einem innerhalb des Ventilkörpers 346 beweglich gehaltenen Ventilkolben 331. Der Ventilkörper 346 ist, jeweils durch um den Ventilkörper 346 umlaufende und gegen eine Innenwandung 296 des Ventileinsatzes 294 abdichtende Dichtringe, insbesondere einen Dichtring 342, ausgebildet zum Bilden von Druckkammern, insbesondere einer ersten Druckkammer 346A und einer zweiten Druckkammer 346B.

Das Ventilpatronengehäuse 292 ist insbesondere als ein Block, beispielsweise aus Kunststoff oder Aluminium, ausgebildet und mit Ventileinsätzen 294 versehen, die im Wesentlichen als zylindrische Öffnungen ausgebildet sind. Vorliegend ist das erste Patronenventil 336.1 in einem ersten Ventileinsatz 294.1 und das zweite Patronenventil 336.2 in einem zweiten Ventileinsatz 294.2 angeordnet. Durch Kanäle und dergleichen luft- und/oder fluidführende Verbindungen zwischen den Ventileinsätzen 290, 290.1, 290.2 können die Schaltventile über ihre Anschlüsse 332.1, 332.2, 334.1, 334.2, 334.3 untereinander und/oder mit externen Komponenten verbunden werden, insbesondere zur konstruktiven Umsetzung der in den Schaltbildern von Fig. 8, Fig. 12, Fig. 13, Fig. 14 gezeigten Sensorreinigungsmodule 200, 200.1, 200.2.

Das erste Patronenventil 336.1 ist als ein 3/2-Wegeventil 334 ausgebildet, weil der zweite Ventileinsatz 294.2 durch eine zusätzliche, Druckluft führende Öffnung unterhalb des Ventilkörpers 346.1 des ersten Patronenventils 336.1 - zusätzlich zu einem ersten Anschluss 334.1 und einem in dieser Schnittdarstellung nicht sichtbaren zweiten Anschluss 334.2 - einen dritten Anschluss 334.3 aufweist.

In dem zweiten Ventileinsatz 294.2 ist eine derartige zusätzliche Öffnung unterhalb eines Ventilkörpers 346.2 des zweiten Patronenventils 336.2 nicht vorgesehen, weshalb das zweite Patronenventil 336.2 neben einem ersten Anschluss 332.1 und einem in dieser Schnittdarstellung nicht sichtbaren zweiten Anschluss 332.2 keinen dritten Anschluss wie beim ersten Patronenventil 336.1 aufweist.

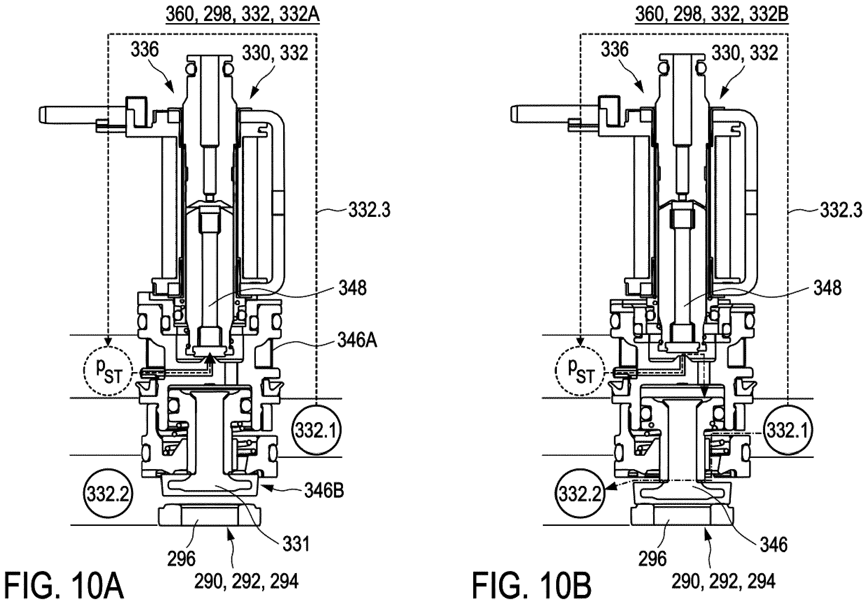

Fig. 10A und Fig. 10B zeigen ein als 2/2-Wegeventil 332 ausgebildetes bevorzugtes Schaltventil 360 in einer Schnittansicht. Bei der hier gezeigten Ausführungsform handelt es sich um ein als Magnetventil ausgebildetes Patronenventil 336, welches über eine entsprechende elektronische Ansteuerung - und hier optional zusätzlich über einen Steuerdruck PST - geschaltet werden kann. Das Patronenventil 336 ist insbesondere für den Einbau in ein, insbesondere standardisiertes, Ventilpatronengehäuse 292 ausgebildet, welche als Modulgehäuse 290 für ein Sensorreinigungsmodul 200 - oder Teile des Sensorreinigungsmoduls 200 - eingesetzt werden kann.

Der Steuerdruck PST kann über eine hier schematisch dargestellte Steuerdruckleitung 332.3 bereitgestellt werden, wobei die Steuerdruckleitung 332.3 insbesondere mit dem ersten Anschluss 332.1 des 2/2-Wegeventils 332 pneumatisch verbunden ist. Das Patronenventil 336 weist einen Ventilkörper 346 mit einer ersten Ventilkammer 346A und einer zweiten Ventilkammer 346B auf, die über einen relativ zum Ventilkörper 346 bewegbaren Ventilkolben 331 miteinander verbunden oder getrennt werden können. In einer in Fig. 10A dargestellten Schließstellung 332A ist der erste Anschluss 332.1 und der zweite Anschluss 332.2 des 2/2-Wegeventils 332 durch einen Ventilkolben 331 pneumatisch getrennt.

In einer in Fig. 10B gezeigten Öffnungsstellung 332B wird - durch Bestromung eines Magnetankers 348 und einer daraus resultierenden Axialbewegung des Magnetankers 348 der Ventilkolben 331 mit dem Steuerdruck PST beaufschlagt, was eine Axialbewegung des Ventilkolbens 331 in Richtung eines Ventilsitzes 298 des 2/2-Wegeventils 332 zur Folge hat, wobei der Ventilsitz 298 durch einen Teil des Modulgehäuses im Ventilsitz 294 gebildet wird. Als Folge der Axialbewegung des Ventilkolbens 331 wird der erste Anschluss 332.1 mit dem zweiten Anschluss 332.2 pneumatisch verbunden.

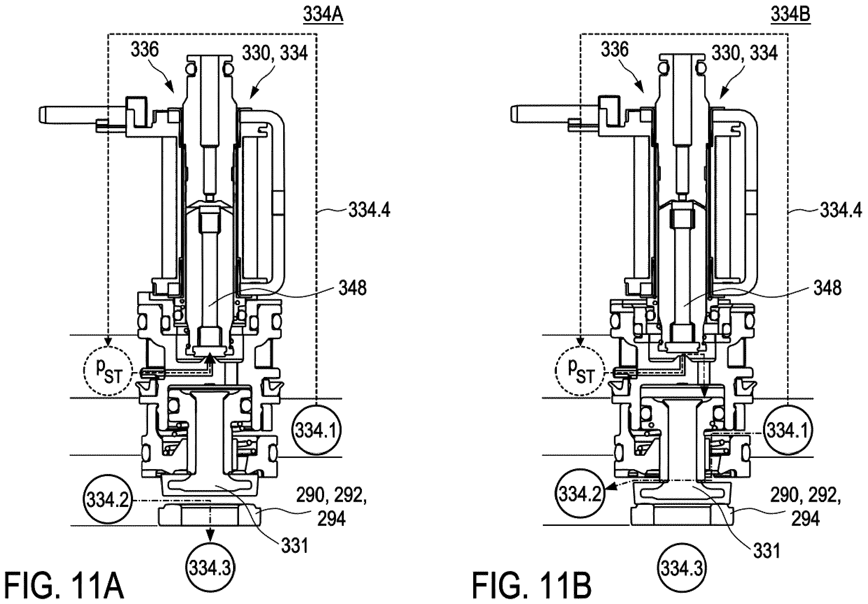

In Fig. 11A und Fig. 11B ist ein weiteres bevorzugtes Schaltventil 360 in Form eines 3/2-Wegeventils 334 dargestellt. Insbesondere ist das 3/2-Wegeventil 334 wie das in Fig. 10A und Fig. 10B gezeigte 2/2-Wegeventil 332 als, insbesondere baugleiches, Patronenventil 336 ausgebildet und kann vorliegend - durch die zusätzliche Nutzung eines im Ventilsitz 298 angeordneten Anschlusses als dritten Anschluss 334.3 - als 3/2-Wegeventil 334 genutzt werden. Der Ventilsitz 298 - und somit der dritte Anschluss 334.3 - ist unterhalb des Ventilkörpers 346 und des Ventilkolbens 331 im Ventileinsatz 294 angeordnet.

In der in Fig. 11A gezeigten Schließstellung 334A des 3/2-Wegeventils 334 ist der Magnetanker 348 in seiner geschlossenen Stellung, wodurch der Steuerdruck PST nicht auf den Ventilkolben 331 wirken kann. In dieser Schließstellung 334A ist der erste Anschluss 334.1 gesperrt und der zweite Anschluss 334.2 mit dem dritten Anschluss 334.3 pneumatisch verbunden. Analog zu der in Fig. 10B gezeigten Öffnungsstellung 332B des 2/2-Wegeventils 332 wird in einer in Fig. 11B gezeigten Öffnungsstellung 334B des 3/2-Wegeventils 334 der Magnetanker 348 durch Bestromung nach oben bewegt, wodurch der Steuerdruck PST auf den Ventilkolben 331 wirken kann und diesen axial in Richtung des Ventilsitzes 298 bewegt. Hierdurch wird der dritte Anschluss 334.3 gesperrt und der erste Anschluss 334.1 pneumatisch mit dem zweiten Anschluss 334.2 des 3/2-Wegeventils 334 verbunden.

In alternativen Ausführungsformen können auch andere dem Fachmann bekannte Ventilarten eingesetzt werden, beispielsweise ein direkt schaltendes Magnetventil ohne Verwendung eines Steuerdrucks. Bei einem direkt schaltenden Magnetventil wird der Ventilkolben direkt durch die Bestromung eines Magnetankers bewegt, wodurch kein Beaufschlagen des Ventilkolbens mit einem Steuerdruck nötig ist.

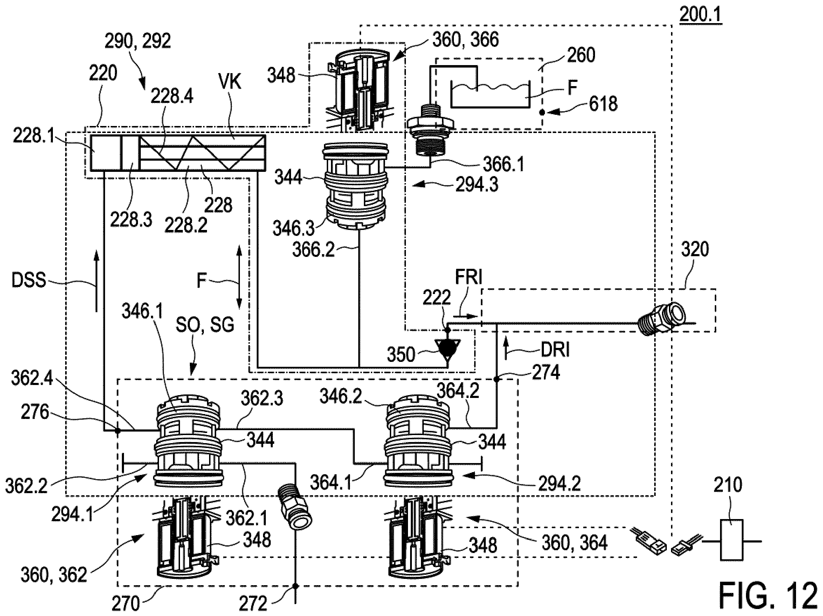

In Fig. 12 ist eine weitere Ausführungsform eines Sensorreinigungsmoduls 200.1 dargestellt, die im Unterschied zu der in Fig. 8 gezeigten Ausführungsform Ventilkörper 346 aufweist, welche anstelle des lediglich einseitig dichtenden Dichtrings 342 einen beidseitig abdichtenden O-Ring, insbesondere mit einem runden Querschnitt, aufweisen. Durch die beidseitig dichtende Wirkung des O-Rings 344 kann im Unterschied zu der in Fig. 8 gezeigten Ausführungsform auf das erste Rückschlagventil 372, das zweite Rückschlagventil 374, das dritte Rückschlagventil 376 und das vierte Rückschlagventil 378 verzichtet werden, wodurch der Aufbau des Sensorreinigungsmoduls 200.1 vorteilhaft vereinfacht wird. Weiterhin ist in Fig. 12 beispielhaft eine Modulsteuereinheit 210, insbesondere zum Ansteuern der Schaltventile 362, 364, 366, dargestellt. Die Darstellung der Modulsteuereinheit 210 wurde in den übrigen gezeigten Ausführungsformen aus Gründen der Übersichtlichkeit weggelassen.

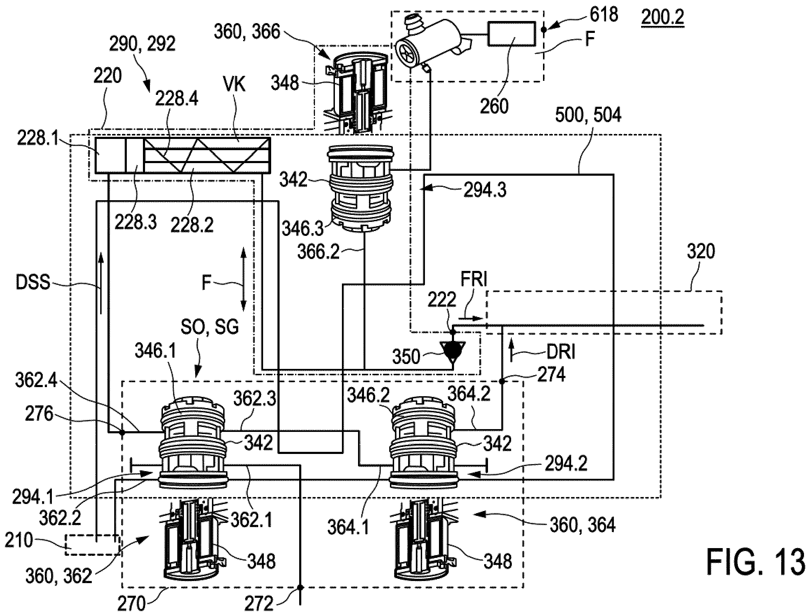

In Fig. 13 ist eine weitere Ausführungsform eines Sensorreinigungsmoduls 200.2 dargestellt, welches zusätzlich zu dem in Fig. 12 dargestellten Sensorreinigungsmodul 200.1 eine Heizeinrichtung 500 in Form eines Heizdrahtes 504 aufweist. Ein derartiger Heizdraht kann auch in sämtlichen anderen gezeigten Ausführungsformen von Sensormodulen 200 verwendet werden. Der Heizdraht 504 ist vorteilhaft derart durch das Gehäuse 290, insbesondere das Ventilpatronengehäuse 292, geführt, dass sämtliche wesentlichen Komponenten, insbesondere die Schaltventile 362, 364, 366 sowie der Pumpmechanismus 220, von dem Heizdraht 504 erwärmt werden. Der Heizdraht ist bevorzugt an die Modulsteuereinheit 210 zwecks Energieversorgung und Steuerung angeschlossen. Alternativ oder zusätzlich kann ein Relais zur Versorgung und Steuerung des Heizdrahts 504 vorgesehen werden. Mit einer Heizeinrichtung 500 kann vorteilhaft das Einfrieren des Sensorreinigungsmoduls 200.2 bei niedrigen Temperaturen vermieden und/oder ein Erwärmen der Reinigungsflüssigkeit F zur Verbesserung der Reinigungsleistung erreicht werden.

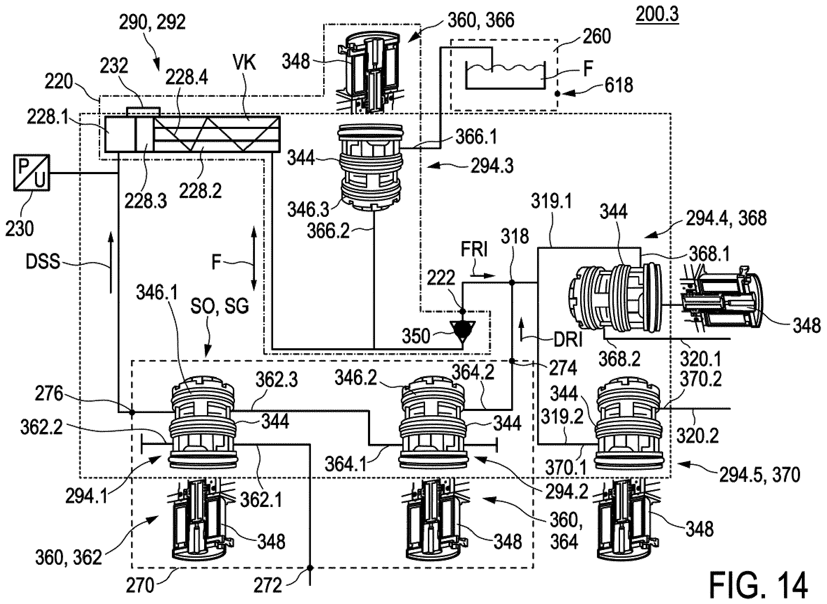

In Fig. 14 ist eine weitere Ausführungsform eines Sensorreinigungsmoduls 200.3 dargestellt, welches zusätzlich zu dem in Fig. 12 dargestellten Sensorreinigungsmodul 200.1 zwei weitere Schaltventile, nämlich ein viertes Schaltventil 368 und ein fünftes Schaltventil 370 aufweist. Hierzu weist das als Ventilpatronengehäuse 292 ausgebildete Gehäuse 290 einen vierten Ventileinsatz 294.4 für das vierte Schaltventil 368, sowie einen fünften Ventileinsatz 294.5 für das fünfte Schaltventil 370 auf. Das in Fig. 14 gezeigte Sensorreinigungsmodul 200.3 ist zum Versorgen mehrerer Reinigungsdüsen 320.1, 320.2 ausgebildet. Durch das vierte und fünfte Schaltventil 368, 370 kann vorteilhaft das selektive Versorgen unterschiedlicher Reinigungsdüsen 320.1, 320.2 erfolgen.

Eine Medienzusammenführung 318, welche den Reinigungs-Flüssigkeitsanschluss 222 und den Reinigungs-Druckluftanschluss 274 zusammenführt, ist in Strömungsrichtung der Reinigungsimpulse FRI, DRI vor eine Aufteilung in eine erste Düsenzweigleitung 319.1 und eine zweite Düsenzweigleitung 319.2 angeordnet. Das vierte Schaltventil 368 ist in der ersten Düsenzweigleitung 319.1, und das zweite Schaltventil 370 ist in der zweiten Düsenzweigleitung 319.2 angeordnet. Durch ein Schalten des vierten Schaltventils 368 in eine geöffnete Stellung SO kann eine fluidführende Verbindung zwischen einem ersten Anschluss 368.1 und einem zweiten Anschluss 368.2 des vierten Schaltventils 368 hergestellt werden, um die erste Düsenzweigleitung 319.1 mit einer ersten Reinigungsdüse 320.1 zu verbinden und entsprechend Reinigungsimpulse FRI, DRI auf die erste Reinigungsdüse 320.1 zu leiten. Statt nur einer ersten Reinigungsdüse 320.1 können selbstverständlich auch mehrere Reinigungsdüsen 320 mit dem zweiten Anschluss 368.2 des vierten Schaltventils 368 verbunden werden.

In analoger Weise kann durch ein Schalten des fünften Schaltventils 370 in eine geöffnete Stellung SO eine fluidführende Verbindung zwischen einem ersten Anschluss 370.1 und einem zweiten Anschluss 370.2 des fünften Schaltventils 370 hergestellt werden, um die zweite Düsenzweigleitung 319.2 mit einer zweiten Reinigungsdüse 320.2 zu verbinden und entsprechend Reinigungsimpulse FRI, DRI auf die zweite Reinigungsdüse 320.2 zu leiten. Statt nur einer zweiten Reinigungsdüse 320.2 können selbstverständlich auch mehrere Reinigungsdüsen 320 mit dem zweiten Anschluss 370.2 des fünften Schaltventils 370 verbunden werden.

Des Weiteren kann ein Sensorreinigungsmodul 200 in allen Ausführungsformen, wie hier beispielhaft im Sensorreinigungsmodul 200.3 gezeigt, einen Drucksensor 230 und/oder einen Positionssensor 232 aufweisen, um den Druckaufbau im Pumpmechanismus 220, insbesondere im Kolben 228, zu messen und in Abhängigkeit dieses Drucks bzw. in Abhängigkeit der Position des Stempels 228.3, die Schaltventile zur schalten. In Ausführungsformen mit einem Drucksensor 230 und/oder einem Positionssensor 232 kann insbesondere vorteilhaft die Position des Stempels 228.3 variabel regelungstechnisch eingestellt werden. Insbesondere können in derartigen Weiterbildungen die Dauer und die Intensität des Flüssigkeit-Reinigungsimpulses FRI und/oder des Druckluft-Reinigungsimpulses DRI variabel, insbesondere bedarfsgerecht, eingestellt werden. Hierzu ist der Drucksensor 230 und/oder der Positionssensor 232 signalführend mit der (hier nicht dargestellten) Modulsteuereinheit 210 verbunden.

### BEZUGSZEICHENLISTE (Teil der Beschreibung)

- 100: Sensorreinigungssystem
- 200: Sensorreinigungsmodul
- 200': weiteres Sensorreinigungsmodul
- 200": noch weiteres Sensorreinigungsmodul
- 200.1-3: weitere Ausführungsformen eines Sensorreinigungsmoduls
- 210: Modulsteuereinheit
- 210': weitere Modulsteuereinheit
- 210": noch weitere Modulsteuereinheit
- 211: Vorrichtungssteuereinheit
- 212: Modulsteuerleitung
- 213: Vorrichtungssteuerleitung
- 213.1, 213.2: erste, zweite Vorrichtungssteuerleitung
- 214: Modulkommunikationsleitung
- 220: Pumpmechanismus
- 222: Reinigungs-Fluidanschluss
- 226: Düsen-Flüssigkeitsleitung
- 228: Kolben
- 228.1: Luftkammer des Kolbens
- 228.2: Flüssigkeitskammer des Kolbens
- 228.3: Stempel
- 228.4: Rückstellfeder
- 230: Drucksensor
- 232: Positionssensor
- 260: Modulspeicher
- 260': weiterer Modulspeicher
- 260": noch weiterer Modulspeicher
- 264: Speicherleitung
- 270: Ventileinheit
- 272: Moduldruckluftanschluss
- 274: Reinigungs-Druckluftanschluss
- 276: Steuerungs-Druckluftanschluss
- 278: Düsen-Druckluftleitung
- 280: Moduldruckluftspeicher
- 290: Modulgehäuse
- 292: Ventilpatronengehäuse
- 294: Ventileinsatz
- 294.1-5: erster bis fünfter Ventileinsatz
- 296: Innenwandung des Ventileinsatzes
- 298: Ventilsitz des Ventileinsatzes
- 300: Sensoroberfläche
- 301: Sensor
- 318: Medienzusammenführung
- 319.1, 319.2: erste, zweite Düsenzweigleitung
- 320: Reinigungsdüse
- 331: Ventilkolben
- 332: 2/2-Wegeventil
- 332.1: erster Anschluss des 2/2-Wegeventils
- 332.2: zweiter Anschluss des 2/2-Wegeventils
- 332.3: Steuerleitung des 2/2-Wegeventils
- 332A: Schließstellung des 2/2-Wegeventils
- 332B: Öffnungsstellung des 2/2-Wegeventils
- 334: 3/2-Wegeventil
- 334.1: erster Anschluss des 3/2-Wegeventils
- 334.2: zweiter Anschluss des 3/2-Wegeventils
- 334.3: dritter Anschluss des 3/2-Wegeventils
- 334.4: Steuerleitung des 3/2-Wegeventils
- 334A: Schließstellung des 3/2-Wegeventils
- 334B: Öffnungsstellung des 3/2-Wegeventils
- 336: Patronenventil
- 336.1, 336.2: erstes, zweites Patronenventil
- 342: Dichtring
- 344: O-Ring
- 346: Ventilkörper
- 346A, 346B: erste und zweite Ventilkammer
- 348: Magnetanker
- 350: Ansaugdruck-Rückschlagventil
- 360: Schaltventil
- 362: erstes Schaltventil
- 362.1-4: erster bis vierter Anschluss des ersten Schaltventils
- 364: zweites Schaltventil
- 364.1-2: erster, zweiter Anschluss des zweiten Schaltventils
- 366: drittes Schaltventil
- 366.1-2: erster, zweiter Anschluss des dritten Schaltventils
- 368: viertes Schaltventil
- 368.1-2: erster, zweiter Anschluss des vierten Schaltventils
- 370: fünftes Schaltventil
- 370.1-2: erster, zweiter Anschluss des fünften Schaltventils
- 372: erstes Rückschlagventil
- 374: zweites Rückschlagventil
- 376: drittes Rückschlagventil
- 378: viertes Rückschlagventil
- 400: Flüssigkeitsquelle
- 410: Scheibenwischerflüssigkeitstank
- 420: Brennstoffzelle
- 430: Regenauffangeinrichtung
- 440: Kühlanlage
- 450: Lufttrockner
- 500: Heizeinrichtung
- 502: Wärmetauscher
- 510: Abwärme
- 520: Wärmequelle
- 522: Brennkraftmaschine
- 524: Abgassystem
- 602: Steuerleitung
- 600: Druckluftquelle
- 602: Kompressor
- 604: zentraler Druckluftspeicher
- 606: Druckluftversorgungsanlage
- 608: Druckluftleitung
- 610: Pumpe
- 618: Modulflüssigkeitsanschluss
- 620: Flüssigkeitszuleitung
- 622: Austauschleitung
- 1000: Fahrzeug
- 1002: PKW
- 1004: Nutzfahrzeug
- 1006: Anhänger
- 1007: Dachoberfläche des Anhängers
- 1020: Fahrzeugsteuereinheit
- 1022: Steuersignal
- 1024: Zentralsteuerleitung
- 1026: Fahrzeugbus
- 1030: Frontbereich des Fahrzeugs
- 1032: erstes Sensorcluster
- 1040: Heckbereich des Fahrzeugs
- 1042: zweites Sensorcluster
- LA: Leitungslänge
- DL: Druckluft
- DRI: Druckluftreinigungsimpuls
- DSS: Druckluftsteuerungssignal
- F: Reinigungsflüssigkeit
- FRI: Flüssigkeitsreinigungsimpuls
- LA: Leitungsabstand
- PST: Steuerdruck
- S: Steuerungssignal
- SG: geschlossene Stellung des Schaltventils
- SO: geöffnete Stellung des Schaltventils
- SV: Vorrangstellung
- VF: Fassungsvermögen des Modulspeichers
- VK: Kolbenvolumen

## Patentansprüche

1. Sensorreinigungssystem (100) für ein Fahrzeug (1000) aufweisend:
- mindestens ein Sensorreinigungsmodul (200), wobei das Sensorreinigungsmodul (200) eine Ventileinheit (270) aufweist, wobei
- die Ventileinheit (270) ausgebildet ist zum Annehmen von Druckluft (DL) über einen Moduldruckluftanschluss (272) und zum selektiven Abgeben eines Druckluftreinigungsimpulses (DRI) über einen Reinigungs-Druckluftanschluss (274), und
- das Sensorreinigungsmodul (200) einen Modulspeicher (260) und einen Pumpmechanismus (220) aufweist, wobei
- der Modulspeicher (260) ausgebildet ist zum Aufnehmen und zum Speichern einer über einen Modulflüssigkeitsanschluss (618) bereitgestellten Reinigungsflüssigkeit (F), und der fluidführend mit dem Pumpmechanismus (220) verbunden ist, und
- der Pumpmechanismus (220) ausgebildet ist zum Bereitstellen der Reinigungsflüssigkeit (F) in Form des Flüssigkeitsreinigungsimpulses (FRI) an einem Reinigungs-Fluidanschluss (222) in Abhängigkeit eines Steuerungssignals (S),
**dadurch gekennzeichnet, dass**
- der Pumpmechanismus (220) druckluftbetrieben ist, wobei das Steuerungssignal (S) als ein Druckluftsteuerungssignal (DSS) ausgebildet ist, und
- die Ventileinheit (270) ausgebildet ist zum selektiven Abgeben des Druckluftsteuerungssignals (DSS) über einen Steuerungs-Druckluftanschluss (276).

2. Sensorreinigungssystem (100) nach Anspruch 1, **dadurch gekennzeichnet, dass**
- das Sensorreinigungsmodul (200) eine Modulsteuereinheit (210) aufweist, die ausgebildet ist zum Steuern der Ventileinheit (270), insbesondere in Abhängigkeit eines von einer Fahrzeugsteuereinheit (1020) des Fahrzeugs (1000) bereitgestellten Steuersignals (1022) und/oder dass
- das Sensorreinigungssystem (100) eine Vorrichtungssteuereinheit (211) aufweist, die ausgebildet ist zum Steuern der Ventileinheiten (270) des mindestens einen, insbesondere sämtlicher, Sensorreinigungsmodule (200, 200', 200") des Sensorreinigungssystems (100), insbesondere in Abhängigkeit eines von einer Fahrzeugsteuereinheit (1020) des Fahrzeugs (1000) bereitgestellten Steuersignals (1022).

3. Sensorreinigungssystem (100) nach einem der Ansprüche 1 bis 2, **gekennzeichnet durch**
- mindestens eine luft- und/oder fluidführend mit dem Sensorreinigungsmodul (200) verbundene Reinigungsdüse (320), ausgebildet zum Beaufschlagen einer Sensoroberfläche (300) mit einem Flüssigkeitsreinigungsimpuls (FRI) und/oder einem Druckluftreinigungsimpuls (DRI).

4. Sensorreinigungssystem (100) nach einem der vorherigen Ansprüche, **gekennzeichnet durch**
- mindestens ein weiteres Sensorreinigungsmodul (200`), wobei das Sensorreinigungsmodul (200) und das mindestens eine weitere Sensorreinigungsmodul (200')
- über eine Austauschleitung (622) bidirektional fluidführend verbunden sind und/oder
- über eine Steuerleitung (602) bidirektional signalführend verbunden sind.

5. Sensorreinigungssystem (100) nach Anspruch 4, **dadurch gekennzeichnet, dass**
- das Sensorreinigungsmodul (200) einem, insbesondere im Frontbereich (1030) des Fahrzeugs (1000) angeordneten, ersten Sensorcluster (1032) mit einer Anzahl von örtlich zusammenliegenden Reinigungsdüsen (320, 320.1, 320.2, 320.3) für mindestens einen, insbesondere für jeweils einen, Sensor (301, 301.1, 301.2, 301.3) zugeordnet ist und
- das weitere das Sensorreinigungsmodul (200') einem, insbesondere im Heckbereich (1040) des Fahrzeugs (1000) angeordneten, zweiten Cluster (1042) mit einer Anzahl von örtlich zusammenliegenden Reinigungsdüsen (320, 320.4, 320.5, 320.6) für mindestens einen, insbesondere für jeweils einen, Sensor (301, 301.4, 301.5, 301.6) zugeordnet ist.

6. Sensorreinigungssystem (100) nach einem der vorherigen Ansprüche, **dadurch gekennzeichnet, dass** der Modulspeicher (260) fluidführend mit mindestens einer Flüssigkeitsquelle (400), insbesondere einem Scheibenwischerflüssigkeitstank (410), einer Brennstoffzelle (420), einer Regenauffangeinrichtung (430), einer Kühlanlage (440) einem Lufttrockner (450) und/oder einem weiteren Sensorreinigungsmodul (200`), verbunden ist, wobei insbesondere das Sensorreinigungsmodul (200) tiefer als die Flüssigkeitsquelle (400) angeordnet ist.

7. Sensorreinigungssystem (100) nach Anspruch 6, weiter aufweisend eine zum Fördern der Reinigungsflüssigkeit (F) ausgebildete Pumpe (610), die in einer - das Sensorreinigungsmodul (200) mit mindestens einer Flüssigkeitsquelle (400) fluidführend verbindenden - Flüssigkeitszuleitung (620) oder einer Austauschleitung (622), angeordnet ist.

8. Sensorreinigungssystem (100) nach einem der vorherigen Ansprüche, **dadurch gekennzeichnet, dass** einem Sensorreinigungsmodul (200) mindestens zwei Reinigungsdüsen (320), bevorzugt mindestens drei Reinigungsdüsen (320), zugeordnet sind.

9. Sensorreinigungssystem (100) nach einem der vorherigen Ansprüche, **dadurch gekennzeichnet, dass** die Reinigungsdüse (320) vom Sensorreinigungsmodul (200) separat angeordnet ist.

10. Sensorreinigungssystem (100) nach Anspruch 8, **dadurch gekennzeichnet, dass** eine Leitungslänge (LA) zwischen dem Sensorreinigungsmodul (200) und mindestens einer, insbesondere sämtlichen, mit dem Sensorreinigungsmodul (200) verbundenen Reinigungsdüsen (320) weniger als 80 cm, bevorzugt weniger als 50 cm, beträgt.

11. Sensorreinigungssystem (100) nach einem der vorherigen Ansprüche, **dadurch gekennzeichnet, dass** das Sensorreinigungsmodul (200) einen Moduldruckluftspeicher (280), ausgebildet zum Aufnehmen und zum lokalen Speichern der über den Moduldruckluftanschluss (272) bereitgestellten Druckluft (DL).

12. Sensorreinigungssystem (100) nach einem der vorherigen Ansprüche, **dadurch gekennzeichnet, dass** der Modulspeicher (260) des Sensorreinigungsmoduls (200) ein Fassungsvermögen (VF) zwischen 250 ml und 3000 ml, bevorzugt zwischen 250 ml und 1000 ml aufweist.

13. Sensorreinigungssystem (100) nach einem der vorherigen Ansprüche, **dadurch gekennzeichnet, dass** das Sensorreinigungsmodul (200) angeordnet und/oder ausgebildet zum Nutzen von Abwärme (510) einer Wärmequelle (520) des Fahrzeugs (1000), insbesondere eine Heizeinrichtung (500) aufweist.

14. Sensorreinigungssystem (100) nach einem der vorherigen Ansprüche, **dadurch gekennzeichnet, dass** das Sensorreinigungsmodul (200)
- ein das Sensorreinigungsmodul (200) einfassendes Modulgehäuse (290), insbesondere aus Kunststoff oder Aluminium oder Aluminiumguss, aufweist, wobei insbesondere
- das Modulgehäuse (290) aus einem Ventilpatronengehäuse (292) gebildet ist, mit einem ersten bis dritten Ventileinsatz (294.1, 294.2, 294.3), wobei
- jedem Ventileinsatz (294.1, 294.2, 294.3) ein in dem Ventileinsatz (294.1, 294.2, 294.3) angeordnetes, als Patronenventil (336) ausgebildetes, Schaltventil (360, 362, 364, 366) zugeordnet ist.

15. Sensorreinigungssystem (100) nach Anspruch 14, **dadurch gekennzeichnet, dass** die Ventileinsätze (294.1, 294.2, 294.3, 294.4, 294.5) annährend hohlzylindrisch ausgebildet sind und die Schaltventile (360, 362, 364, 366, 368, 370) jeweils einen Ventilkörper (346) mit einer ersten und einer zweiten axial benachbart angeordneten Ventilkammer (346A, 346B) aufweisen, die durch einen druckdicht gegen eine Innenwandung (296) des Ventileinsatzes (294.1, 294.2, 294.3, 294.4, 294.5) anliegenden Dichtring (342) mindestens in einer Strömungsrichtung pneumatisch getrennt sind, wobei bevorzugt der Dichtring (342) als beidseitig sperrender O-Ring (344) ausgebildet ist.

16. Fahrzeug (1000), insbesondere PKW (1002) oder Nutzfahrzeug (1004) oder Anhänger (1006), aufweisend ein Sensorreinigungssystem (100) nach einem der vorherigen Ansprüche.

## Claims

1. Sensor cleaning system (100) for a vehicle (1000), comprising:
- at least one sensor cleaning module (200), the sensor cleaning module (200) having a valve unit (270),
- the valve unit (270) being designed to receive compressed air (DL) via a module compressed air port (272) and to selectively output a compressed air cleaning pulse (DRI) via a cleaning compressed air port (274), and
- the sensor cleaning module (200) having a module reservoir (260) and a pump mechanism (220),
- the module reservoir (260) being designed to receive and store a cleaning liquid (F) provided via a module liquid port (618) and being fluid-conductingly connected to the pump mechanism (220), and
- the pump mechanism (220) being designed to provide the cleaning liquid (F) in the form of the liquid cleaning pulse (FRI) at a cleaning fluid port (222) on the basis of a control signal (S),
**characterized in that**
- the pump mechanism (220) is operated by compressed air, the control signal (S) being in the form of a compressed air control signal (DSS), and
- the valve unit (270) being designed to selectively output the compressed air control signal (DSS) via a control compressed air port (276).

2. Sensor cleaning system (100) according to claim 1, **characterized in that**
- the sensor cleaning module (200) has a module control unit (210) which is designed to control the valve unit (270), in particular on the basis of a control signal (1022) provided by a vehicle control unit (1020) of the vehicle (1000) **and/or in that**
- the sensor cleaning system (100) has a device control unit (211) which is designed to control the valve units (270) of the at least one, in particular all, sensor cleaning modules (200, 200', 200") of the sensor cleaning system (100), in particular on the basis of a control signal (1022) provided by a vehicle control unit (1020) of the vehicle (1000).

3. Sensor cleaning system (100) according to either of claims 1 or 2, **characterized by**
- at least one cleaning nozzle (320), which is air- and/or fluid-conductingly connected to the sensor cleaning module (200) and designed to apply a liquid cleaning pulse (FRI) and/or a compressed air cleaning pulse (DRI) to a sensor surface (300).

4. Sensor cleaning system (100) according to any of the preceding claims, **characterized by**
- at least one further sensor cleaning module (200'), the sensor cleaning module (200) and the at least one further sensor cleaning module (200')
- being bidirectionally fluid-conductingly connected via an exchange line (622) and/or
- being bidirectionally signal-conductingly connected via a control line (602).

5. Sensor cleaning system (100) according to claim 4, **characterized in that**
- the sensor cleaning module (200) is assigned to a first sensor cluster (1032), which is arranged in particular in the front region (1030) of the vehicle (1000) and has a number of relatively closely arranged cleaning nozzles (320, 320.1, 320.2, 320.3) for at least one sensor (301, 301.1, 301.2, 301.3), in particular for one sensor in each case and
- the further the sensor cleaning module (200') is assigned to a second cluster (1042), which is arranged in particular in the rear region (1040) of the vehicle (1000) and has a number of relatively closely arranged cleaning nozzles (320, 320.4, 320.5, 320.6) for at least one sensor (301, 301.4, 301.5, 301.6), in particular for one sensor in each case.

6. Sensor cleaning system (100) according to any of the preceding claims, **characterized in that** the module reservoir (260) is fluid-conductingly connected to at least one liquid source (400), in particular a windshield wiper liquid tank (410), a fuel cell (420), a rain collection device (430), a cooling system (440), an air dryer (450) and/or a further sensor cleaning module (200'), in particular, the sensor cleaning module (200) being arranged lower than the liquid source (400).

7. Sensor cleaning system (100) according to claim 6, further comprising a pump (610) designed to deliver the cleaning liquid (F), which pump is arranged in a liquid supply line (620) - which fluid-conductingly connects the sensor cleaning module (200) to at least one liquid source (400) - or an exchange line (622).

8. Sensor cleaning system (100) according to any of the preceding claims, **characterized in that** at least two cleaning nozzles (320), preferably at least three cleaning nozzles (320), are assigned to a sensor cleaning module (200).

9. Sensor cleaning system (100) according to any of the preceding claims, **characterized in that** the cleaning nozzle (320) is arranged separately from the sensor cleaning module (200).

10. Sensor cleaning system (100) according to claim 8, **characterized in that** a line length (LA) between the sensor cleaning module (200) and at least one, in particular all, cleaning nozzles (320) connected to the sensor cleaning module (200) is less than 80 cm, preferably less than 50 cm.

11. Sensor cleaning system (100) according to any of the preceding claims, **characterized in that** the sensor cleaning module (200) a module compressed air reservoir (280) designed to receive and locally store the compressed air (DL) provided via the module compressed air port (272).

12. Sensor cleaning system (100) according to any of the preceding claims, **characterized in that** the module reservoir (260) of the sensor cleaning module (200) has a capacity (VF) between 250 ml and 3000 ml, preferably between 250 ml and 1000 ml.

13. Sensor cleaning system (100) according to any of the preceding claims, **characterized in that** the sensor cleaning module (200) is arranged and/or designed to utilize waste heat (510) from a heat source (520) of the vehicle (1000), in particular a heating device (500).

14. Sensor cleaning system (100) according to any of the preceding claims, **characterized in that** the sensor cleaning module (200)
- has a module housing (290) enclosing the sensor cleaning module (200), in particular made of plastics material or aluminum or cast aluminum, in particular
- the module housing (290) being formed by a valve cartridge housing (292) having a first to third valve insert (294.1, 294.2, 294.3),
- each valve insert (294.1, 294.2, 294.3) being assigned a switching valve (360, 362, 364, 366) arranged in the valve insert (294.1, 294.2, 294.3) and designed as a cartridge valve (336).

15. Sensor cleaning system (100) according to claim 14,
**characterized in that** the valve inserts (294.1, 294.2, 294.3, 294.4, 294.5) are approximately hollow-cylindrical and the switching valves (360, 362, 364, 366, 368, 370) each have a valve body (346) having a first and a second axially adjacent valve chamber (346A, 346B), which are pneumatically separated at least in one flow direction by a sealing ring (342) that rests pressure-tightly against an inner wall (296) of the valve insert (294.1, 294.2, 294.3, 294.4, 294.5), the sealing ring (342) preferably being in the form of an O-ring (344) that blocks on both sides.

16. Vehicle (1000), in particular a passenger car (1002) or commercial vehicle (1004) or trailer (1006), comprising a sensor cleaning system (100) according to any of the preceding claims.

## Revendications

1. Système de nettoyage de capteur (100), pour un véhicule (1000), présentant :
- au moins un module de nettoyage de capteur (200), dans lequel le module de nettoyage de capteur (200) présente une unité de soupape (270), dans lequel
- l'unité de soupape (270) est conçue pour la réception de l'air comprimé (DL) par l'intermédiaire d'un raccord d'air comprimé modulaire (272) et pour la délivrance sélective d'une impulsion de nettoyage par air comprimé (DRI) par l'intermédiaire d'un raccord d'air comprimé de nettoyage (274), et
- le module de nettoyage de capteur (200) présente un magasin de modules (260) et un mécanisme de pompage (220), dans lequel
- le magasin de modules (260) est conçu pour la réception et le stockage d'un liquide de nettoyage (F) fourni par l'intermédiaire d'un raccord de liquide de module (618), et qui est relié de manière fluidique au mécanisme de pompage (220), et
- le mécanisme de pompage (220) est conçu pour la fourniture du liquide de nettoyage (F) sous la forme de l'impulsion de nettoyage par liquide (FRI) à un raccord de liquide de nettoyage (222) en fonction d'un signal de commande (S),
**caractérisé en ce que**
- le mécanisme de pompage (220) est actionné par de l'air comprimé, dans lequel le signal de commande (S) est conçu comme un signal de commande d'air comprimé (DSS), et
- l'unité de soupape (270) est conçu pour la délivrance sélective du signal de commande d'air comprimé (DSS) par l'intermédiaire d'un raccord d'air comprimé de commande (276).

2. Système de nettoyage de capteur (100) selon la revendication 1, **caractérisé en ce que**
- le module de nettoyage de capteur (200) présente une unité de commande de module (210) qui est conçue pour la commande de l'unité de soupape (270), en particulier en fonction d'un signal de commande (1022) fourni par une unité de commande de véhicule (1020) du véhicule (1000) **et/ou en ce que**
- le système de nettoyage de capteur (100) présente une unité de commande de dispositif (211) qui est conçue pour la commande des unités de soupape (270) d'au moins un, en particulier de tous les modules de nettoyage de capteur (200, 200', 200") du système de nettoyage de capteur (100), en particulier en fonction d'un signal de commande (1022) fourni par une unité de commande de véhicule (1020) du véhicule (1000).

3. Système de nettoyage de capteur (100) selon l'une des revendications 1 à 2, **caractérisé par**
- au moins une buse de nettoyage (320) reliée au module de nettoyage de capteur (200) par une conduite d'air et/ou de fluide, conçue pour la soumission d'une surface de capteur (300) à une impulsion de nettoyage par liquide (FRI) et/ou à une impulsion de nettoyage par air comprimé (DRI).

4. Système de nettoyage de capteur (100) selon l'une des revendications précédentes, **caractérisé par**
- au moins un autre module de nettoyage de capteur (200'), dans lequel le module de nettoyage de capteur (200) et l'au moins un autre module de nettoyage de capteur (200')
- sont reliés de manière bidirectionnelle par une conduite d'échange (622) de manière fluidique et/ou
- sont reliés par une conduite de commande (602) de manière à transmettre des signaux de manière bidirectionnelle.

5. Système de nettoyage de capteur (100) selon la revendication 4, **caractérisé en ce que**
- le module de nettoyage de capteur (200) est associé à un premier groupe de capteurs (1032), disposé en particulier dans la zone avant (1030) du véhicule (1000), comportant un certain nombre de buses de nettoyage (320, 320.1, 320.2, 320.3) localement rapprochées pour au moins un, en particulier respectivement pour un capteur (301, 301.1, 301.2, 301.3) et
- l'autre le module de nettoyage de capteur (200') est associé à un second groupe (1042), disposé en particulier dans la zone arrière (1040) du véhicule (1000), comportant un certain nombre de buses de nettoyage (320, 320.4, 320.5, 320.6) localement rapprochées pour au moins un, en particulier respectivement pour un capteur (301, 301.4, 301.5, 301.6).

6. Système de nettoyage de capteur (100) selon l'une des revendications précédentes, **caractérisé en ce que** le magasin de modules (260) est relié de manière fluidique à au moins une source de liquide (400), en particulier un réservoir de liquide d'essuie-glace (410), une pile à combustible (420), un dispositif de collecte de pluie (430), une installation de refroidissement (440), un sécheur à air (450) et/ou un autre module de nettoyage de capteur (200'), dans lequel le module de nettoyage de capteur (200) est en particulier disposé plus bas que la source de liquide (400).

7. Système de nettoyage de capteur (100) selon la revendication 6, présentant en outre une pompe (610) conçue pour le refoulement du liquide de nettoyage (F), qui est disposée dans une conduite d'amenée de liquide (620) ou une conduite d'échange (622) - reliant le module de nettoyage de capteur (200) à au moins une source de liquide (400) de manière fluidique.

8. Système de nettoyage de capteur (100) selon l'une des revendications précédentes, **caractérisé en ce qu'**au moins deux buses de nettoyage (320), de préférence au moins trois buses de nettoyage (320), sont associées à un module de nettoyage de capteur (200).

9. Système de nettoyage de capteur (100) selon l'une des revendications précédentes, **caractérisé en ce que** la buse de nettoyage (320) est disposée séparément du module de nettoyage de capteur (200).

10. Système de nettoyage de capteur (100) selon la revendication 8, **caractérisé en ce qu'**une longueur de conduite (LA) entre le module de nettoyage de capteur (200) et au moins une, en particulier toutes les buses de nettoyage (320) reliées au module de nettoyage de capteur (200), est inférieure à 80 cm, de préférence inférieure à 50 cm.

11. Système de nettoyage de capteur **(100) selon l'une des revendications** précédentes, **caractérisé en ce que** le module de nettoyage de capteur (200) un **magasin d'air comprimé de module** (280), conçu pour la réception et le stockage **locale de l'air comprimé (DL) fourni par l'intermédiaire du raccord d'air comprimé** de module (272).

12. Système de nettoyage de capteur **(100) selon l'une des revendications** précédentes, **caractérisé en ce que** le magasin de modules (260) du module de nettoyage de capteur (200) présente une capacité (VF) comprise entre 250 ml et 3000 ml, de préférence entre 250 ml et 1000 ml.

13. Système de nettoyage de capteur **(100) selon l'une des revendications** précédentes, **caractérisé en ce que** le module de nettoyage de capteur (200) est **disposé et/ou conçu pour l'utilisation de chaleur perdue (510) d'une source de** chaleur (520) du véhicule (1000), en particulier un dispositif de chauffage (500).

14. Système de nettoyage de capteur **(100) selon l'une des revendications** précédentes, **caractérisé en ce que** le module de nettoyage de capteur (200)
- présente un boîtier de module (290) entourant le module de nettoyage de capteur (200), en particulier en matière plastique ou en aluminium ou en fonte **d'aluminium, dans lequel en particulier**
- le boîtier de module **(290) est formé d'un boîtier de cartouche de** soupape (292), comportant un premier à un troisième insert de soupape (294.1, 294.2, 294.3), dans lequel
- à chaque insert de soupape (294.1, 294.2, 294.3) est associée une soupape de commutation **(360, 362, 364, 366) disposée dans l'insert de** soupape (294.1, 294.2, 294.3) et conçue sous forme de soupape à cartouche (336).

15. Système de nettoyage de capteurs (100) selon la revendication 14, **caractérisé en ce que** les inserts de soupape (294.1, 294.2, 294.3, 294.4, 294.5) sont approximativement conçues sous forme cylindrique creuse et les soupapes de commutation (360, 362, 364, 366, 368, 370) présentent respectivement un corps de soupape (346) comportant une première et une seconde chambre de soupape (346A, 346B) disposées axialement de manière adjacente, qui sont séparées pneumatiquement par une bague **d'étanchéité** (342) étanche à la pression contre une paroi intérieure (296) de **l'insert de soupape** (294.1, 294.2, 294.3, 294.4, 294.5) au moins dans une **direction d'écoulement, dans lequel l**a bague **d'étanchéité** (342) est de préférence conçue comme un joint torique (344) bloquant des deux côtés.

16. Véhicule (1000), en particulier voiture (1002) ou véhicule utilitaire (1004) ou remorque (1006), présentant un système de nettoyage de capteur (100) selon **l'une des revendications précédentes.**
